# EUROPEAN PATENT SPECIFICATION

(11) **EP 4 030 609 B1**
(45) Date of publication and mention of the grant of the patent: **20.08.2025**
(21) Application number: 21215788.7
(22) Date of filing: 18.12.2021
(51) Int. Cl.: H02M 3/158, H02M 1/00, H02M 3/07, H02M 7/483

(54) **MULTI-PHASE HYBRID CONVERTER**
MEHRPHASEN-HYBRIDWANDLER
CONVERTISSEUR HYBRIDE À PHASES MULTIPLES

(30) Priority: 19.01.2021 US 202117152065; 14.07.2021 US 202117375830
(43) Date of publication of application: 20.07.2022
(73) Proprietor: Analog Devices, Inc., Wilmington, MA 01887 (US)
(72) Inventor: JONG, Owen, San Jose, 95136 (US); LIU, Ya, Sunnyvale, 94087 (US); YAN, Yingyi, 94555, Fremont (US); ZHANG, Jindong, Fremont, 94539 (US)
(74) Representative: Horler, Philip John

(56) References cited:
- EP-A1- 3 734 825
- US-A1- 2014 346 962
- US-A1- 2020 091 817
- US-B1- 10 833 661
- HALAMICEK MICHAEL ET AL: "Cross-Coupled Series-Capacitor Quadruple Step-Down Buck Converter", 2020 IEEE APPLIED POWER ELECTRONICS CONFERENCE AND EXPOSITION (APEC), IEEE, 15 March 2020 (2020-03-15), pages 1 - 6, XP033784905, DOI: 10.1109/APEC39645.2020.9124412
- WANG CHUANG ET AL: "A Two-Phase Three-Level Buck DC-DC Converter With X-Connected Flying Capacitors for Current Balancing", IEEE SOLID-STATE CIRCUITS LETTERS, IEEE, vol. 3, 22 September 2020 (2020-09-22), pages 442 - 445, XP011815189, DOI: 10.1109/LSSC.2020.3026056
- LI CHENG ET AL: "A Novel Hybrid 4:1 Step Down Converter Using an Autotransformer with DC Winding Current", 2020 IEEE ENERGY CONVERSION CONGRESS AND EXPOSITION (ECCE), IEEE, 11 October 2020 (2020-10-11), pages 173 - 180, XP033851364, DOI: 10.1109/ECCE44975.2020.9236418

## Description

### FIELD OF THE DISCLOSURE

This document pertains generally, but not by way of limitation, to power converter circuits.

### BACKGROUND

Hybrid power converter circuits provide efficient power solutions for power supply design. A hybrid power converter circuit is a type of power converter that provides direct current to direct current (DC-DC) voltage conversion based on switched capacitor converters and inductor-based converters. A hybrid power converter contains one or more switching elements (e.g., one or more transistors) and reactive elements (e.g., capacitors and inductors) that, in connection with a periodic switching of the switching elements provides DC output voltage.

Multiphase hybrid DC/DC converters combing buck stages with cross-coupled switched capacitor stages are discussed, for example, in the following IEEE publications:
"Cross-Coupled Series-Capacitor Quadruple Step-Down Buck Converter" (2020) from Halamicek Michael, McRae Timothy, Prodic Aleksandar;
"A Two-Phase Three-Level Buck DC-DC Converter With X-Connected Flying Capacitors for Current Balancing" (2020) from Wang Chuang, Lu YanHuang Mo, Martins Rui P.;
"A Novel Hybrid 4:1 Step Down Converter Using an Autotransformer with DC Winding Current" (2020) from Li Cheng, Serrano Diego, Cobos Jose A.

### SUMMARY OF THE DISCLOSURE

This disclosure describes a multi-phase hybrid DC-DC converter circuit topology, including dual-phase hybrid DC-DC converter circuits and N-phase hybrid DC-DC converter circuits (also referred to as a "hybrid converter" in this disclosure) using a switched-capacitor technique. The multi-phase hybrid converter of this disclosure can reduce the volt-seconds on the inductors of the converter, which can allow for a reduction in the size of the inductors. In addition, the multi-phase hybrid converter can utilize inductors as current sources to charge and discharge the flying capacitors (similar to ideal lossless charge transfer), which can reduce the size of the mid capacitor and increase solution density. Because charging and discharging are performed by inductors, the multi-phase hybrid converter of this disclosure can eliminate the capacitor-to-capacitor charge transfer. As such, the multi-phase hybrid converter does not need high capacitance to achieve high efficiency operation, which can further increase solution density. Finally, by using an inventive gate driving technique, the multi-phase hybrid converter can operate at a higher duty cycle than other approaches.

According to a first aspect of the invention, a multi-phase hybrid converter is disclosed according to claim 1.

According to a second aspect of the invention, a method of operating a multi-phase hybrid converter is disclosed according to claim 11.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a schematic diagram of an example of a dual-phase hybrid converter.
FIG. 2 is a schematic diagram of an example of control logic circuitry for the dual-phase hybrid converter of FIG. 1.
FIG. 3 is an example of a timing diagram of the control signals of the dual-phase hybrid converter in FIG. 1.
FIG. 4 is another example of a timing diagram of the control signals of the dual-phase hybrid converter in FIG. 1.
FIG. 5A is a schematic diagram of an example of a first operating phase of the dual-phase hybrid converter of FIG. 1 for a duty cycle less than 50%.
FIG. 5B is a schematic diagram of an example of a second operating phase of the dual-phase hybrid converter of FIG. 1 for a duty cycle less than 50%.
FIG. 5C is a schematic diagram of an example of a third operating phase of the dual-phase hybrid converter of FIG. 1 for a duty cycle less than 50%.
FIG. 6A is a schematic diagram of an example of a first operating phase of the dual-phase hybrid converter of FIG. 1 for a duty cycle greater than 50%.
FIG. 6B is a schematic diagram of an example of a second operating phase of the dual-phase hybrid converter of FIG. 1 for a duty cycle greater than 50%.
FIG. 6C is a schematic diagram of an example of a third operating phase of the dual-phase hybrid converter of FIG. 1 for a duty cycle greater than 50%.
FIG. 7 is a schematic diagram of another example of a dual-phase hybrid converter.
FIG. 8 is a schematic diagram of another example of a dual-phase hybrid converter.
FIG. 9 is a schematic diagram of another example of a dual-phase hybrid converter.
FIG. 10 is a schematic diagram of the dual-phase hybrid converter of FIG. 1 coupled as a buck converter.
FIG. 11 is a schematic diagram of the dual-phase hybrid converter of FIG. 1 coupled as a boost converter.
FIG. 12A is a schematic diagram of another example of a first operating phase of the dual-phase hybrid converter of FIG. 1 for a duty cycle less than 50%.
FIG. 12B is a schematic diagram of another example of a second operating phase of the dual-phase hybrid converter of FIG. 1 for a duty cycle less than 50%.
FIG. 12C is a schematic diagram of another example of a third operating phase of the dual-phase hybrid converter of FIG. 1 for a duty cycle less than 50%.
FIG. 12D is a schematic diagram of another example of a fourth operating phase of the dual-phase hybrid converter of FIG. 1 for a duty cycle less than 50%.
FIG. 13 is a schematic diagram of an example of an N-phase hybrid converter.
FIG. 14 is a schematic diagram of another example of an N-phase hybrid converter.
FIG. 15 is an example of a timing diagram of the control signals of the N-phase hybrid converters of FIG. 13 where the duty cycle is less than 50%.
FIG. 16 is another example of a timing diagram of the control signals of the N-phase hybrid converter of FIG. 13 where the duty cycle is greater than 50%.
FIG. 17 is a schematic diagram of an example of a N-phase hybrid converter system.

### DETAILED DESCRIPTION

This disclosure describes a multi-phase hybrid DC-DC converter circuit topology, including dual-phase hybrid DC-DC converter circuits and N-phase hybrid DC-DC converter circuits (also referred to as a "hybrid converter" in this disclosure) using a switched-capacitor technique. The multi-phase hybrid converter of this disclosure can reduce the volt-seconds on the inductors of the converter, which can allow for a reduction in the size of the inductors. In addition, the multi-phase hybrid converter can utilize inductors as current sources to charge and discharge the flying capacitors (similar to ideal lossless charge transfer), which can reduce the size of the mid capacitor and increase solution density. Because charging and discharging are performed by inductors, the multi-phase hybrid converter of this disclosure can eliminate the capacitor-to-capacitor charge transfer. As such, the multi-phase hybrid converter does not need high capacitance to achieve high efficiency operation, which can further increase solution density. Finally, by using an inventive gate driving technique, the multi-phase hybrid converter can operate at a higher duty cycle than other approaches.

The term "converter," as used in this disclosure, includes but is not limited to any one of, or any combination of "regulator," "DC regulator," "voltage regulator," "DC voltage regulator," "DC-DC converter," "DC converter" and "converter," and includes, but is not limited to, the plain meaning of any one or more of these terms.

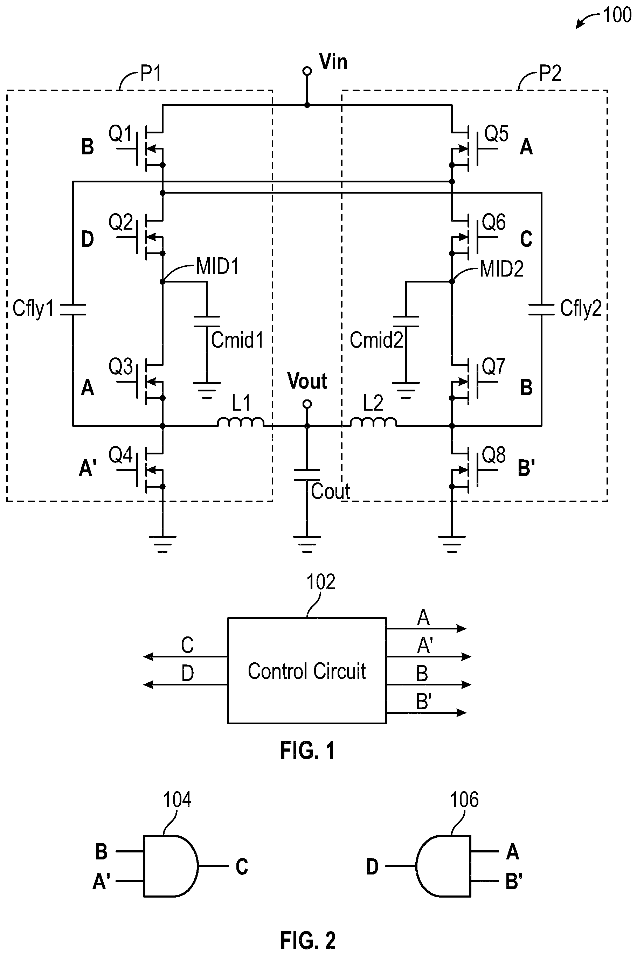

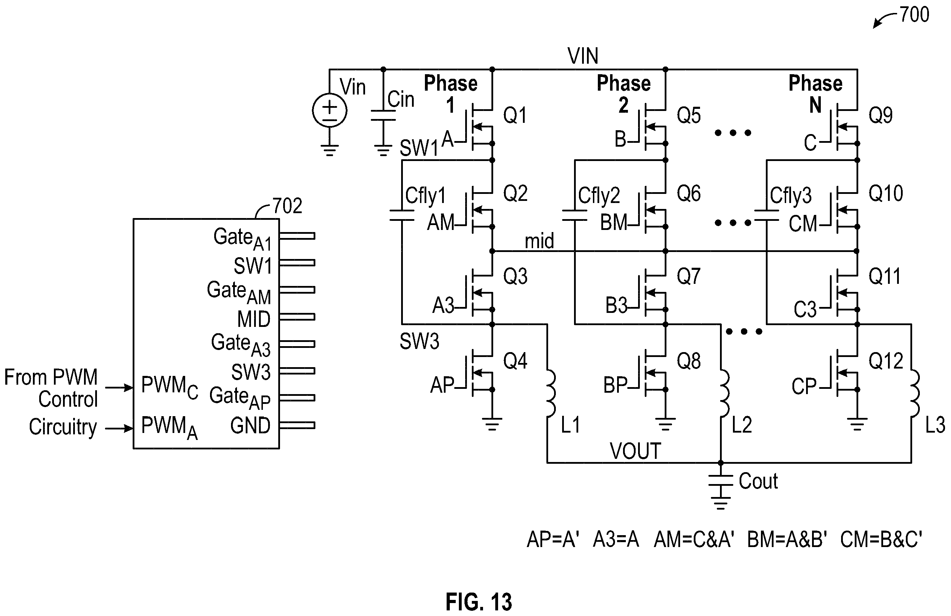

Multi-phase hybrid converters can include both dual-phase hybrid converters as well as N-phase hybrid converters. Various examples of a dual-phase hybrid converter are described below with respect to FIGS. 1-12D and various examples of an N-phase hybrid converter are described below with respect to FIGS. 13-17.

FIG. 1 is a schematic diagram of an example of a dual-phase hybrid converter 100. The dual-phase hybrid converter 100 can include a first half power stage P1 including a first switching element Q₁, a second switching element Q₂, a third switching element Q₃, a fourth switching element Q₄, a first inductor L₁, and a first switched-capacitor C_{fly1} (also referred to in this disclosure as a flying capacitor). The dual-phase hybrid converter 100 can further include a second half power stage P2 including a fifth switching element Q₅, a sixth switching element Q₆, a seventh switching element Q₇, an eighth switching element Q₈, a second inductor L₂, and a second switched-capacitor C_{fly2} (also referred to in this disclosure as a flying capacitor). The switching elements of FIG. 1 can be transistors, e.g., power transistors.

In the example shown in FIG. 1, the first switching element Q₁ and the second switching element Q₂ are connected in series between the input voltage V_{IN} and a first middle node MID1. The fifth switching element Q₅ and the sixth switching element Q₆ are connected in series between the input voltage V_{IN} and a second middle node MID2.

The dual-phase hybrid converter 100 can provide regulation using at least one switched-capacitor circuit with at least one switching converter circuit, and thus is a hybrid converter. For example, the first half power stage P1 can include a first switched-converter circuit and a first switching converter circuit. The first switched-converter circuit can include the first switching element Q₁, the second switching element Q₂, and the first flying capacitor C_{fly1}, and a first switching converter circuit that includes the third switching element Q₃, the fourth switching element Q₄, and the first inductor L₁. As seen in FIG. 1, the second switching element Q₂ is coupled in series with the third switching element Q₃.

Similarly, the second half power stage P2 can include a second switched-converter circuit and a second switching converter circuit. The second switched-converter circuit can include the fifth switching element Q₅, the sixth switching element Q₆, and the second flying capacitor C_{fly2}, and a second switching converter circuit that includes the seventh switching element Q₇, the eighth switching element Q₈, and the second inductor L₂. The sixth switching element Q₆ is coupled in series with the seventh switching element Q₇.

As seen in FIG. 1, the flying capacitors C_{fly1} and C_{fly2} of the dual-phase hybrid converter 100 are cross-coupled. More particularly, the first flying capacitor (C_{fly1}) can be connected between the second switched-capacitor circuit and the first switching converter circuit, and the second flying capacitor C_{fly2} can be connected between the first switched-capacitor circuit and the second switching converter circuit.

The dual-phase hybrid converter 100 can receive an input voltage V_{IN} from an input terminal and provide an output voltage V_{O} to an output terminal that is connected to an output capacitor C_{OUT}. In some examples, the output terminal of the dual-phase hybrid converter 100 can be coupled to any desired load. The dual-phase hybrid converter 100 can operate with a duty cycle "D" that changes in relation to a ratio of 2V_{O}/V_{IN} (duty cycle = D = 2V_{O}/V_{IN}).

A control circuit 102 can output control signals to the corresponding control nodes of the switching elements, such as to the gate terminals of transistors, of the dual-phase hybrid converter 100. The control circuit 102 can include logic circuitry to generate control signals A, A', B, B', C, and D. The controls signals can be square wave signals, for example. In some examples, the control circuit 102 can control the frequency and duty cycle of the control signals.

In some examples, the control circuit 102 can include a pulse-width modulation (PWM) controller that generates PWM signals to power stages P1, P2 to turn the switching elements Q₁-Q₈ ON or OFF according to a switching frequency and/or duty cycle. The control circuit 102 can include an input/output (I/O) interface and can be programmed (e.g., before start-up of the converter) with a switching frequency and/or duty cycle, for example, by way of the I/O interface.

As shown in FIG. 1, the first through eighth switching elements Q₁-Q₈ are controlled by control signals A, A', B, B', C and D, where A' is complementary control signal of A, and B' is complementary control signal of B. Because the example shown in FIG. 1 implements the switching element using n-type transistors (such as n-type field-effect transistors), when a given control signal is high, the corresponding switching element is ON. However, implementations using p-type transistors, n-type and p-type transistors, and/or other types of switches are also possible.

An example of logic circuitry to generate control signals C and D is shown and described with respect to FIG. 2. The control signal D can be generated using a first AND gate 104 by (B AND A'), and the control signal C can be generated using a second AND gate 106 by (A AND B').

As described in detail below, the control circuit 102 can control operation of the first switching converter circuit (Q₃, Q₄, L₁) using a first timing phase (φ1) and control operation of the second switching converter circuit (Q₇, Q₈, L₂) using a second timing phase (φ2). As such, the hybrid converter 100 of FIG. 1 is a "dual-phase" hybrid converter.

In some examples, the dual-phase hybrid converter circuit 100 can include a first capacitor C_{mid1} coupled between a first node MID1 between the second switching element Q₂ and the third switching element Q₃ and a reference voltage node, such as a ground node. Similarly, the dual-phase hybrid converter circuit 100 can include a second capacitor C_{mid2} coupled between a second node MID2 between the sixth switching element Q₆ and the seventh switching element Q₇ and the reference voltage node.

Including the first capacitor C_{mid1} and the second capacitor C_{mid2} can be advantageous. For example, the capacitors C_{mid1}, C_{mid2} can reduce the parasitic inductance from a long hot loop in the design. Shortening the hot loop and reducing the parasitic inductance can also reduce ringing at high frequencies. In addition, the inclusion of the capacitors C_{mid1}, C_{mid2} can ensure that the voltage stress of switching elements Q₂, Q₃, Q₆, and Q₇ is Vin/2.

As mentioned above, the flying capacitors C_{fly1} and C_{fly2} can be cross-coupled. By cross-coupling the flying capacitors, a voltage does not need to be shared between the two power stages P1, P2. That is, the first node MID1 between the second switching element Q₂ and the third switching element Q₃ and the second node MID2 between the sixth switching element Q₆ and the seventh switching element Q₇ do not need to be connected. By eliminating the connection, the efficiency of the dual-phase hybrid converter 100 can be increased because there is no DC current flowing back and forth between the two power stages P1, P2.

FIG. 2 is a schematic diagram of an example of control logic circuitry for the dual-phase hybrid converter of FIG. 1. As shown in the example of FIG. 2, control signal C can be generated using a first AND gate 104 by (A' AND B), and control signal D can be generated using a second AND gate 106 by (A AND B').

In this manner, the control logic circuitry of FIG. 2 can generate a third control signal (C) using one of the complementary first control signals (A') and one of the complementary second control signals (B). The control signal C can control operation of the second switched-capacitor circuit (Q₅, Q₆, C_{fly1}).

Similarly, the control logic circuitry of FIG. 2 can generate another third control signal (D) using the other of the complementary first control signals (A) and the other of the complementary second control signals (B'). The control signal D can control operation of the first switched-capacitor circuit (Q₁, Q₂, C_{fly2}).

In some examples, the first and second AND gates 104, 106 can form part of the control circuit 102 of FIG. 1.

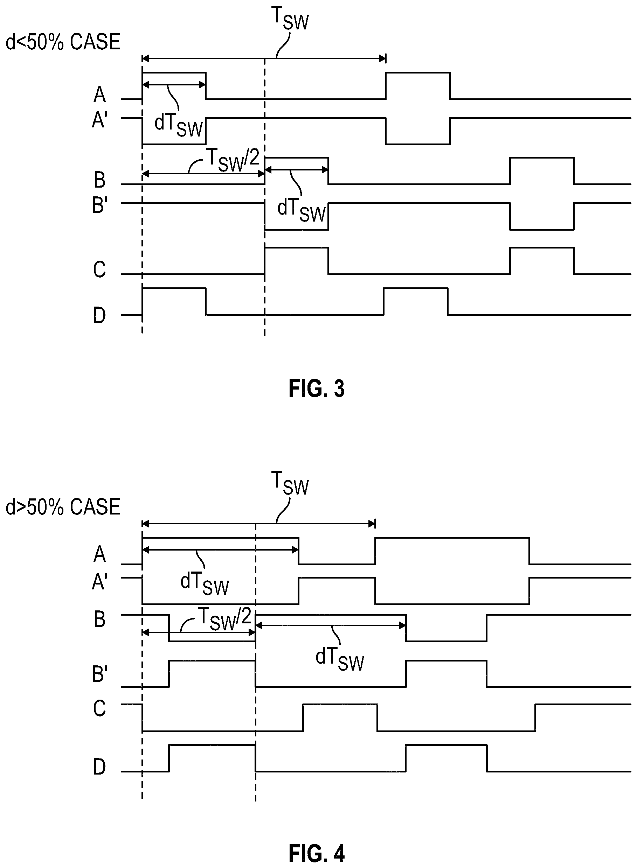

FIG. 3 is an example of a timing diagram of the control signals of the dual-phase hybrid converter in FIG. 1 where the duty cycle is less than 50%. The switching period is T_{SW} and includes D*T_{SW} (φ2) and (1-D*T_{SW}) (φ1), where D is the duty cycle and * represents the mathematical operate for multiplication. The time (1-D*T_{SW}) can represent a first timing phase φ1 (shown as complementary control signals B, B') and the time D*T_{SW} can represent a second timing phase φ2 (shown as control signals complementary A, A'). As seen in the example of FIG. 3, the first timing phase φ1 (specifically control signal B) and the second timing phase φ2 (specifically control signal A) do not overlap with one another. A control circuit, such as the control circuit 102 of FIG. 1, can generate the first and second timing phases according to a switching cycle having a switching frequency and a duty cycle, where the duty cycle is less than 50%.

In some non-limiting examples, the control signals A and B can be 180 degrees out of phase, such as by setting the time between a rising edge of a logic high of the A control signal and a rising edge of a logic high of the B control signal at half the switching period, or T_{SW}/2.

FIG. 4 is another example of a timing diagram of the control signals of the dual-phase hybrid converter in FIG. 1 where the duty cycle is greater than 50%. The switching period is T_{SW} and includes D*T_{SW} (φ2) and (1-D*T_{SW}) (φ1), where D is the duty cycle and * represents the mathematical operate for multiplication. The time (1-D*T_{SW}) can represent a first timing phase φ1 (shown as complementary control signals B, B'), and the time D*T_{SW} can represent a second timing phase φ2 (shown as complementary control signals A, A'). As seen in the example of FIG. 4, the first timing phase φ1 (specifically control signal B) and the second timing phase φ2 (specifically control signal A) can overlap with one another. A control circuit, such as the control circuit 102 of FIG. 1, can generate the first and second timing phases according to a switching cycle having a switching frequency and a duty cycle, where the duty cycle is greater than 50%.

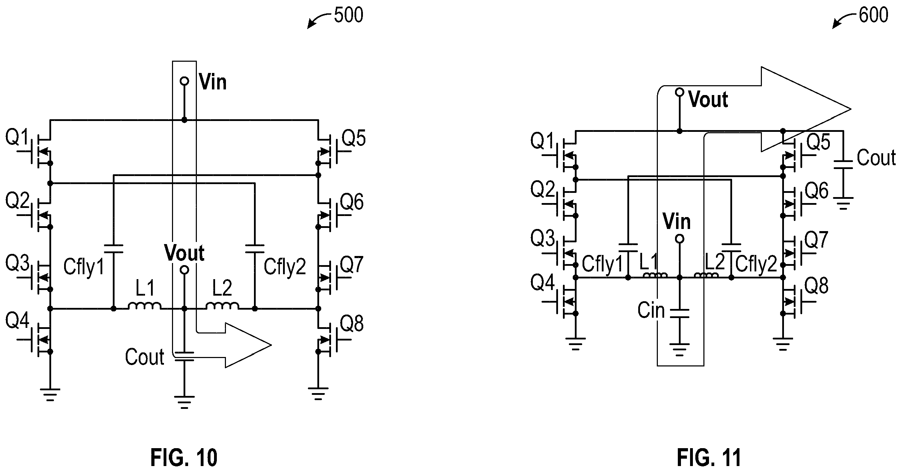

The control circuit, such as the control circuit 102 of FIG. 1, can generate controls signals, such as shown in FIG. 3 or FIG. 4, and apply, according to a switching cycle having a switching frequency and a duty cycle, the complementary first control signals, the complementary second control signals, and the complementary third control signals, where the switching cycle includes the first timing phase (φ1) and the second timing phase (φ2). In response, the first switching converter circuit, the second switching converter circuit, the first switched-capacitor circuit, and the second switched-capacitor circuit can generate a series of pulses to at least one LC circuit including at least one capacitor, e.g., the output capacitor C_{OUT} or the input capacitor C_{IN} of FIG. 11, and at least one inductor, e.g., at least one of the inductors L₁, L₂.

The control circuit can then adjust the duty cycle of the switching signals, specifically control signals A and B, to adjust the series of pulses to set an output voltage across an output capacitor at a predefined and essentially constant amplitude. The dual-phase hybrid converter can then provide the output voltage across the output capacitor C_{OUT} as an output voltage of the dual-phase hybrid converter. If the output capacitor C_{OUT} is part of the LC circuit, such as in FIG. 1, then the configuration is a buck converter where the output voltage is less than the input voltage. If, however, the capacitor is not part of the LC circuit, such as the output capacitor C_{OUT} in FIG. 11, then the configuration is a boost converter where the output voltage is greater than the input voltage.

In some non-limiting examples, the control signals A and B can be 180 degrees out of phase, such as by setting the time between a rising edge of a logic high of the A control signal and a rising edge of a logic high of the B control signal at half the switching period, or T_{SW}/2.

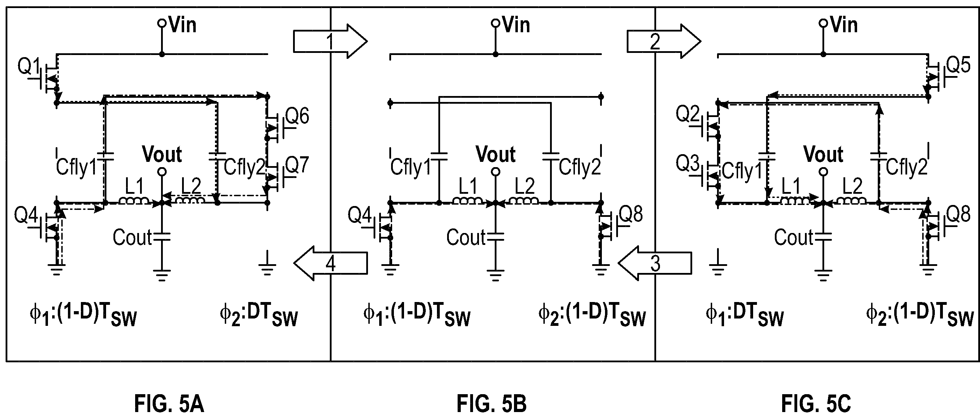

FIG. 5A is a schematic diagram of an example of a first operating phase of the dual-phase hybrid converter of FIG. 1 for a duty cycle less than 50%. The control circuit, such as the control circuit 102 of FIG. 1 can output various control signals to turn ON and OFF various switching elements of FIGS. 5A-5C. The switching elements Q₁, Q₄, Q₆, and Q₇ are turned ON and the switching elements Q₂, Q₃, Q₅, and Q₈ are turned OFF. The capacitor C_{fly1} is coupled to ground and supplies half of the inductor current to the inductor L₂. The control circuit turns the switching element Q₁ ON and the input voltage VIN charges the capacitor C_{fly2} and supplies the other half of the inductor current to the inductor L₂. The inductor L₁ is freewheeling. Additionally, the current through inductor L₁ ramps down while the current through inductor L₂ ramps up. The first timing phase φ1 is represented by (1-D*T_{SW}) and the second timing phase φ2 is represented by D*T_{SW} in the first operating phase of FIG. 5A.

FIG. 5B is a schematic diagram of an example of a second operating phase of the dual-phase hybrid converter of FIG. 1 for a duty cycle less than 50%. The switching elements Q₄ and Q₈ are turned ON and the switching elements Q₁-Q₃ and Q₅-Q₇ are turned OFF. Both the inductor L₁ and the inductor L₂ are freewheeling. The first timing phase φ1 is represented by (1-D*T_{SW}) and the second timing phase φ2 is also represented by (1-D*T_{SW}) in the second operating phase of FIG. 5B.

FIG. 5C is a schematic diagram of an example of a third operating phase of the dual-phase hybrid converter of FIG. 1 for a duty cycle less than 50%. The switching elements Q₂, Q₃, Q₅, and Q₈ are turned ON and the switching elements Q₁, Q₄, Q₆, and Q₇ are turned OFF. The capacitor C_{fly2} is coupled to ground and supplies half of the inductor current to the inductor L₁. The control circuit turns ON the switching element Q₅ and the input voltage VIN charges the capacitor C_{fly1} and supplies the other half of the inductor current to the inductor L₁. The inductor L₂ is freewheeling. The first timing phase φ1 is represented by D*T_{SW} and the second timing phase φ2 is represented by (1-D*T_{SW}) in the third operating phase of FIG. 5C.

Once the third operating phase is complete, the operation cycles back to the second operating phase of FIG. 5B and then to the first operating phase of FIG. 5A, where the operation begins again. During the operation, the switching element Q₇ follows the switching element Q₁, the switching element Q₂ follows the switching element Q₈, the switching element Q₃ follows the switching element Q₅, and the switching element Q₆ follows the switching element Q₄. Both flying capacitors are charged and discharged through an inductor.

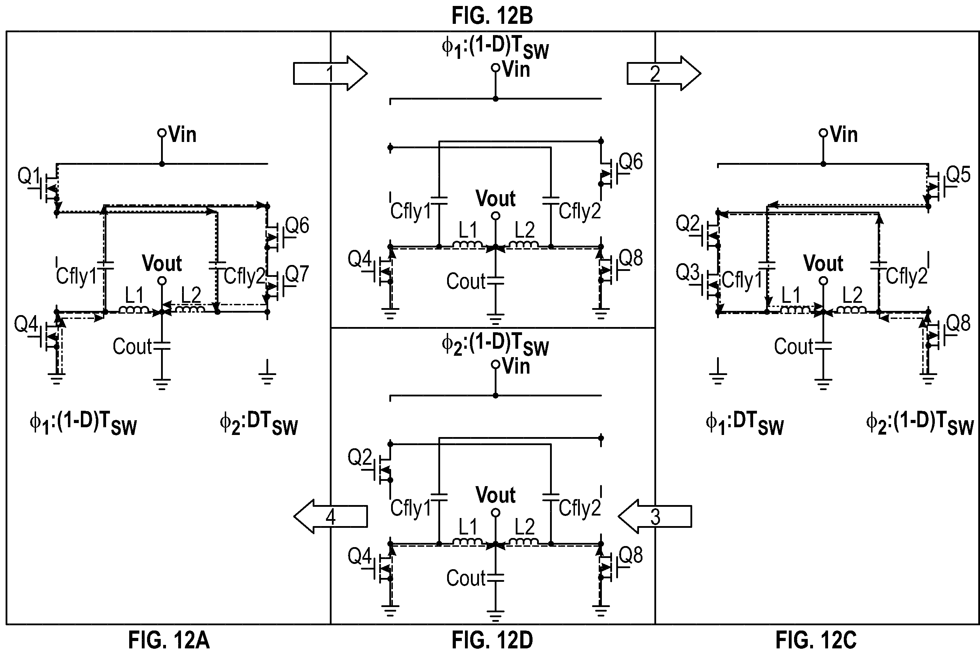

FIGS. 12A-12D depict an alternative example operating phases of the dual-phase hybrid converter of FIG. 1 for a duty cycle less than 50%, as described in detail below.

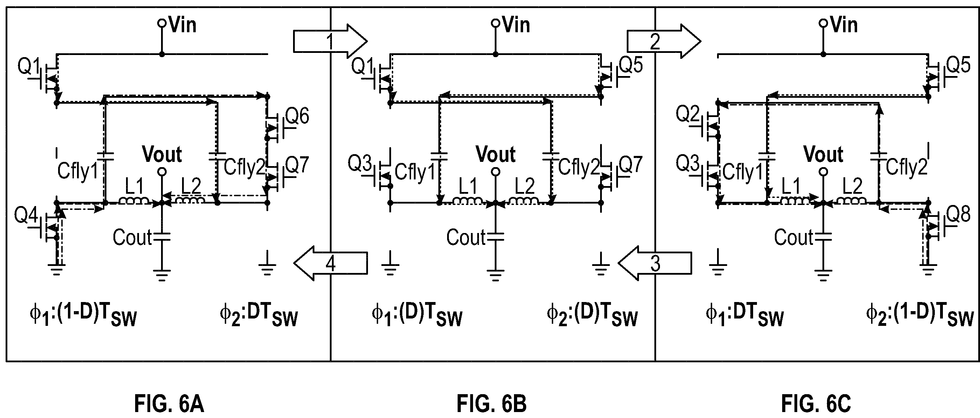

FIG. 6A is a schematic diagram of an example of a first operating phase of the dual-phase hybrid converter of FIG. 1 for a duty cycle greater than 50%. The control circuit, such as the control circuit 102 of FIG. 1 can output various control signals to turn ON and OFF various switching elements of FIGS. 6A-6C. The switching elements Q₁, Q₄, Q₆, and Q₇ are turned ON and the switching elements Q₂, Q₃, Q₅, and Q₈ are turned OFF. The operation in FIG. 6A is similar to the operation in FIG. 5A. The capacitor C_{fly1} is coupled to ground and supplies half of the inductor current to the inductor L₂. The control circuit turns ON the switching element Q₁ and the input voltage VIN charges the capacitor C_{fly2} and supplies the other half of the inductor current to the inductor L₂. The inductor L₁ is freewheeling. The first timing phase φ1 is represented by (1-D*T_{SW}) and the second timing phase φ2 is represented by D*T_{SW} in the first operating phase of FIG. 6A.

FIG. 6B is a schematic diagram of an example of a second operating phase of the dual-phase hybrid converter of FIG. 1 for a duty cycle greater than 50%. The control circuit, e.g., the control circuit 102 of FIG. 1, can turn the switching elements Q₁, Q₅ ON at the same time. To prevent any cross-conduction, the control circuit can turn OFF the switching elements Q₂, Q₆. In some examples, the switching elements Q₃, Q₇ can be ON, such as shown in FIG. 6B. In other examples, the switching elements Q₃, Q₇ can be OFF.

When the switching element Q₁ turns ON, the inductor L₂ is charged through the capacitor C_{fly2}. Similarly, when the switching element Q₅ turns ON, the inductor L₁ is charged through the capacitor C_{fly1}. The first timing phase φ1 is represented by D*T_{SW} and the second timing phase φ2 is also represented by (D*T_{SW}) in the second operating phase of FIG. 6B. As such, the first timing phase φ1 and the second timing phase φ2 overlap.

FIG. 6C is a schematic diagram of an example of a third operating phase of the dual-phase hybrid converter of FIG. 1 for a duty cycle greater than 50%. The switching elements Q₂, Q₃, Q₅, and Q₈ are ON and the switching elements Q₁, Q₄, Q₆, and Q₇ are OFF. The operation in FIG. 6C is similar to the operation in FIG. 5C. The capacitor C_{fly2} is coupled to ground and supplies half of the inductor current to the inductor L₁. The control circuit turns ON the switching element Q₅ and the input voltage VIN charges the capacitor C_{fly1} and supplies the other half of the inductor current to the inductor L₁. The inductor L₂ is freewheeling. The first timing phase φ1 is represented by D*T_{SW} and the second timing phase φ2 is represented by (1-D*T_{SW}) in the third operating phase of FIG. 6C.

Once the third operating phase is complete, the operation cycles back to the second operating phase of FIG. 6B and then to the first operating phase of FIG. 6A, where the operation begins again. During the operation, the switching element Q₆ follows the switching elements Q₁, Q₄, and the switching element Q₂ follows the switching elements Q₅, Q₈. This operation can widen the input voltage range, which can allow for more greater fluctuations of the input voltage.

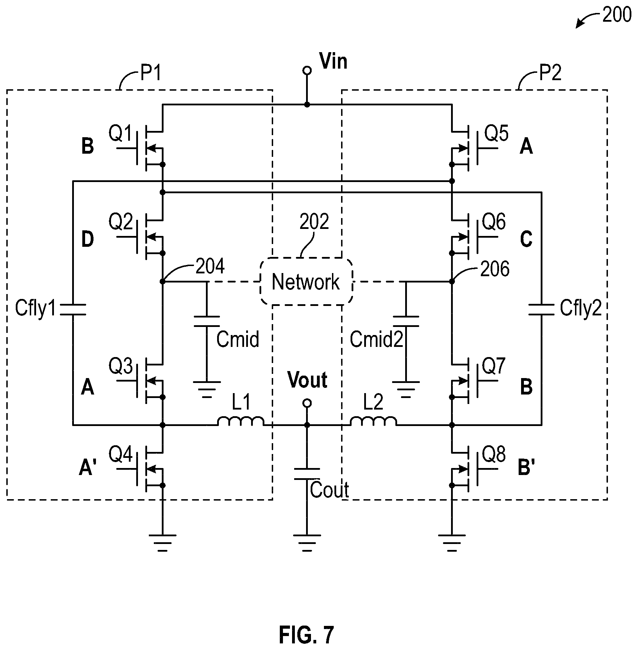

FIG. 7 is a schematic diagram of another example of a dual-phase hybrid converter. In some examples, the dual-phase hybrid converter 200 can include a network circuit 202 coupled between a midpoint node 204 of the first half power stage P1 and a midpoint node 206 of the second half power stage P2. The midpoint node 204 is between the second switching element Q₂ and the third switching element Q₃ and the midpoint node 206 is between the sixth switching element Q₆ and the seventh switching element Q₇.

The network circuit 202 can include at least one of an electrical short (e.g., a low impedance element that directly connects the two nodes), a resistive element, a capacitive element, or an inductive element. For example, the network circuit 202 can include a resistor, a capacitor, or an inductor. As another example, the network circuit 202 can include a resistor and a capacitor, a resistor and an inductor, or a capacitor and an inductor. As another example, the network circuit 202 can include a resistor, a capacitor, and an inductor.

Including a network circuit can be advantageous if during a transient there is a mismatch between the two flying capacitors. In addition, if there is a difference in voltage between the two flying capacitors, the network circuit can match it.

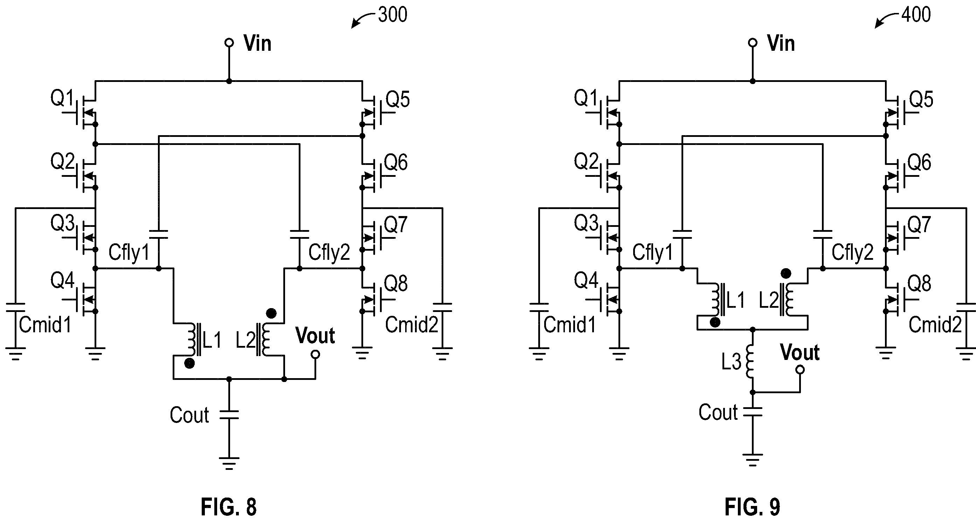

FIG. 8 is a schematic diagram of another example of a dual-phase hybrid converter. The inductors L₁ and L₂ of the dual-phase hybrid converter 300 of FIG. 8 can be a coupled inductor, in contrast to being separate inductors like in FIG. 1. Using a coupled inductor can result in a smaller size and higher efficiency.

FIG. 9 is a schematic diagram of another example of a dual-phase hybrid converter. The inductors L₁ and L₂ of the dual-phase hybrid converter 300 of FIG. 8 can be a transformer, in contrast to being separate inductors like in FIG. 1. In addition, the dual-phase hybrid converter 300 can include a small inductor L3 coupled between the transformer formed by L₁ and L₂ and the output capacitor C_{OUT}. Using a transformer can result in a smaller size and higher efficiency.

FIG. 10 is a schematic diagram of the dual-phase hybrid converter of FIG. 1 coupled as a buck converter. The dual-phase hybrid converter 500 of FIG. 10 can receive an input voltage V_{IN} at a node between the first switching element Q₁ and the fifth switching element Q₅ and generate an output voltage V_{OUT} that is less than an input voltage at a node between the first inductor L₁ and the second inductor L₂.

FIG. 11 is a schematic diagram of the dual-phase hybrid converter of FIG. 1 coupled as a boost converter. The dual-phase hybrid converter 600 of FIG. 10 can receive an input voltage V_{IN} at a node between the first inductor L₁ and the second inductor L2 and generate an output voltage V_{OUT} that is greater than an input voltage at a node between the first switching element Q₁ and the fifth switching element Q₅.

FIG. 12A is a schematic diagram of another example of a first operating phase of the dual-phase hybrid converter of FIG. 1 for a duty cycle less than 50%. The control circuit, such as the control circuit 102 of FIG. 1 can output various control signals to turn ON and OFF various switching elements of FIGS. 5A-5C. The switching elements Q₁, Q₄, Q₆, and Q₇ are turned ON and the switching elements Q₂, Q₃, Q₅, and Q₈ are turned OFF. The capacitor C_{fly1} is coupled to ground and supplies half of the inductor current to the inductor L₂. The control circuit turns the switching element Q₁ ON and the input voltage VIN charges the capacitor C_{fly2} and supplies the other half of the inductor current to the inductor L₂. The inductor L₁ is freewheeling. Additionally, the current through inductor L₁ ramps down while the current through inductor L₂ ramps up. The first timing phase φ1 is represented by (1-D*T_{SW}) and the second timing phase φ2 is represented by D*T_{SW} in the first operating phase of FIG. 12A.

FIG. 12B is a schematic diagram of an example of a second operating phase of the dual-phase hybrid converter of FIG. 1 for a duty cycle less than 50%. The switching elements Q₄ and Q₈ are turned ON and the switching elements Q₁-Q₃ and Q₅ and Q₇ are turned OFF. The switching element Q₆ is turned ON and can remain ON until the switching element Q₅ turns on in the third operating phase of FIG. 12C. Turning the switching element Q₆ ON can improve the voltage balancing between the capacitor C_{fly1} and the capacitors C_{mid1}, C_{mid2}, especially for low duty cycles. Both the inductor L₁ and the inductor L₂ are freewheeling. The first timing phase φ1 is represented by (1-D*T_{SW}) and the second timing phase φ2 is also represented by (1-D*T_{SW}) in the second operating phase of FIG. 12B.

FIG. 12C is a schematic diagram of another example of a third operating phase of the dual-phase hybrid converter of FIG. 1 for a duty cycle less than 50%. The switching elements Q₂, Q₃, Q₅, and Q₈ are turned ON and the switching elements Q₁, Q₄, Q₆, and Q₇ are turned OFF. The capacitor C_{fly2} is coupled to ground and supplies half of the inductor current to the inductor L₁. The control circuit turns ON the switching element Q₅ and the input voltage VIN charges the capacitor C_{fly1} and supplies the other half of the inductor current to the inductor L₁. The inductor L₂ is freewheeling. The first timing phase φ1 is represented by D*T_{SW} and the second timing phase φ2 is represented by (1-D*T_{SW}) in the third operating phase of FIG. 12C.

FIG. 12D is a schematic diagram of an example of a fourth operating phase of the dual-phase hybrid converter of FIG. 1 for a duty cycle less than 50%. The switching elements Q₄ and Q₈ are turned ON and the switching elements Q₁-Q₃ and Q₅ and Q₇ are turned OFF. The switching element Q₂ is turned ON and can remain ON until the switching element Q₁ turns on in the first operating phase of FIG. 12A. Turning the switching element Q₂ ON can improve the voltage balancing between the capacitor C_{fly2} and the capacitors C_{mid1}, C_{mid2}, especially for low duty cycles. Both the inductor L₁ and the inductor L₂ are freewheeling. The first timing phase φ1 is represented by (1-D*T_{SW}) and the second timing phase φ2 is also represented by (1-D*T_{SW}) in the second operating phase of FIG. 12B.

Once the fourth operating phase is complete, the operation cycles back to the first operating phase of FIG. 12A, where the operation begins again. During the operation, the switching element Q₇ follows the switching element Q₁, the switching element Q₂ follows the switching element Q₈, the switching element Q₃ follows the switching element Q₅, and the switching element Q₆ follows the switching element Q₄. Both flying capacitors are charged and discharged through an inductor.

The techniques of this disclosure are not limited to a dual-phase hybrid converter. Rather, the techniques can be extended to an N-phase hybrid converter, where N is greater than 2. The present inventors have recognized that it can be desirable to add two or more phases in parallel to reduce thermal stress and reduce input and output ripples.

The present inventors have recognized that it can be desirable, in some implementations, to be able to add one phase at a time to increase power output, in contrast to some approaches that require the addition of two or more phases. Similarly, the present inventors have recognized that it can be desirable to shed one phase at a time, such as during lighter load conditions, in order to improve efficiency. In other words, operation of one (or more phases) can be disabled during a time period in which operation would otherwise be enabled.

The N-phase hybrid converter can include multiple inductors that can be discrete or coupled on shared magnetic cores ("coupled inductors").

FIG. 13 is a schematic diagram of an example of an N-phase hybrid converter 700. The N-phase hybrid converter 700 can include first phase circuitry, second phase circuitry, third phase circuitry, and so forth up to N phase circuitry.

The first phase circuitry can include a first switching element Q₁, a second switching element Q₂, a third switching element Q₃, a fourth switching element Q₄, a first inductor L₁, and a first switched-capacitor C_{fly1} (also referred to in this disclosure as a flying capacitor). The switching elements of FIG. 13 can be transistors, e.g., power transistors.

The second phase circuit can include a fifth switching element Q₅, a sixth switching element Q₆, a seventh switching element Q₇, an eighth switching element Q₈, a second inductor L₂, and a second switched-capacitor capacitor C_{fly2} (also referred to in this disclosure as a flying capacitor).

The N phase circuit can include a ninth switching element Q₉, a tenth switching element Q₁₀, an eleventh switching element Q₁₁, a twelfth switching element Q₁₃, a third inductor L₃, and a third switched-capacitor capacitor C_{fly3} (also referred to in this disclosure as a flying capacitor). Additional phase circuitry, such as third, fourth, fifth, etc. phase circuitry, can be included between the second phase circuitry and the N phase circuitry.

In the example shown in FIG. 13, the first switching element Q₁ and the second switching element Q₂ are connected in series between the input voltage V_{IN} and a middle node MID. The fifth switching element Q₅ and the sixth switching element Q₆ as well as the ninth switching element Q₉ and the tenth switching element Q₁₀ are similarly connected.

The N-phase hybrid converter 700 can provide regulation using at least one switched-capacitor circuit with at least one switching converter circuit, and thus is a hybrid converter. For example, the first phase circuitry can include a first switched-converter circuit and a first switching converter circuit. The first switched-converter circuit can include the first switching element Q₁, the second switching element Q₂, and the first flying capacitor C_{fly1}, and a first switching converter circuit that includes the third switching element Q₃, the fourth switching element Q₄, and the first inductor L₁. As seen in FIG. 1, the second switching element Q₂ is coupled in series with the third switching element Q₃.

Similarly, the second phase circuitry can include a second switched-converter circuit and a second switching converter circuit. The second switched-converter circuit can include the fifth switching element Q₅, the sixth switching element Q₆, and the second flying capacitor C_{fly2}, and a second switching converter circuit that includes the seventh switching element Q₇, the eighth switching element Q₈, and the second inductor L₂. The sixth switching element Q₆ is coupled in series with the seventh switching element Q₇.

Similarly, the N phase circuitry can include a third switched-converter circuit and a third switching converter circuit. The third switched-converter circuit can include the ninth switching element Q₉, the tenth switching element Q₁₀, and the third flying capacitor C_{fly3}, and a third switching converter circuit that includes the eleventh switching element Q₁₁, the twelfth switching element Q₁₂, and the third inductor L₂. The tenth switching element Q₁₀ is coupled in series with the eleventh switching element Q₁₁. Although only three switched-converter circuits and three switching converter circuits are shown, the techniques can be extended to N phases.

The N-phase hybrid converter 700 can receive an input voltage V_{IN} from an input terminal and provide an output voltage V_{O} to an output terminal that is connected to an output capacitor C_{OUT}. In some examples, the output terminal of the N-phase hybrid converter 700 can be coupled to any desired load. The N-phase hybrid converter 700 can operate with a duty cycle "D" that changes in relation to a ratio of 2V_{O}/V_{IN} (duty cycle = D = 2V_{O}/V_{IN}).

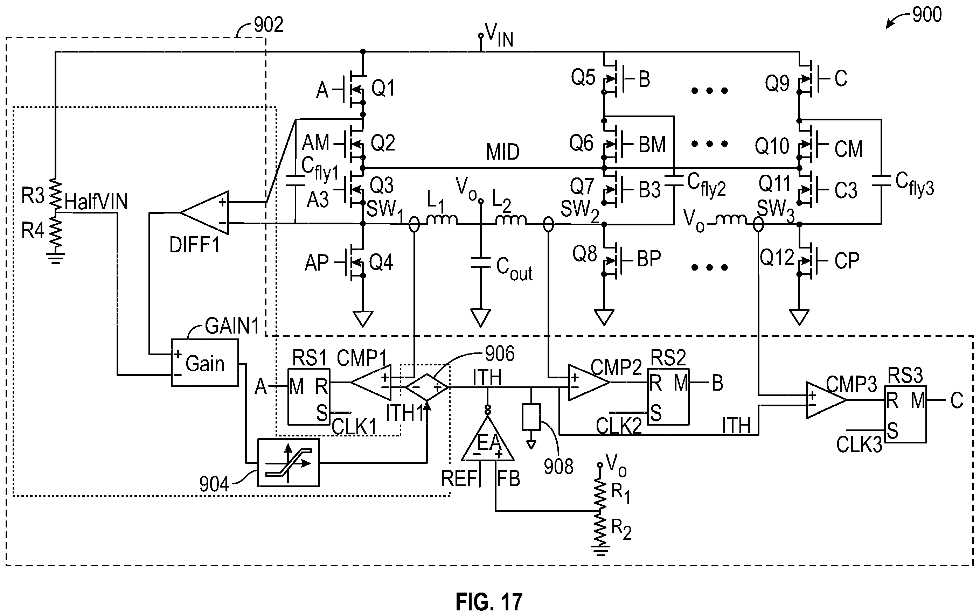

A control circuit 702 can output control signals to the corresponding control nodes of the switching elements, such as to the gate terminals of transistors, of the dual-phase hybrid converter 700. The control circuit 702 can receive PWM signals from PWM control circuitry, for example. For example, the PWM control circuitry can include a pulse-width modulation (PWM) control circuit, such as the PWM control circuit 902 of FIG. 17, that generates PWM signals to turn the switching elements Q₁-Q₁₂ ON or OFF according to a switching frequency and/or duty cycle. The control circuit 702 or other control circuitry can include an input/output (I/O) interface and can be programmed (e.g., before start-up of the converter) with a switching frequency and/or duty cycle, for example, by way of the I/O interface.

The control circuit 702 can receive voltages at nodes SW1, MID and GND and can include logic circuitry to generate phase one (first timing phase φ1) gate driver control signals A, AM, A3, and AP that can be applied to the gates of switching elements Q1-Q4. In other words, the control circuit 702 can be or can include a gate driver circuit common to the first switching element, the second switching element, the third switching element, and the fourth switching element.

The control circuit 702, or one or more additional control circuits, can include logic circuitry to generate phase two (second timing phase φ2) control signals B, BM, B3, BP, and phase N control signals C, CM, C3, and CP (Nth timing phase φN) for example. The controls signals can be square wave signals, for example. In some examples, the control circuit 702 can control the frequency and duty cycle of the control signals.

As shown in FIG. 13, the first through twelfth switching elements Q₁-Q₁₂ are controlled by various control signals, where AP=A', A3=A, AM=C&A', BP=B', B3=B, BM=A&B', CP=C', C3=C, and CM=B&C', where A' is complementary control signal of A, B' is complementary control signal of B, and C' is complementary control signal of C. Because the example shown in FIG. 13 implements the switching element using n-type transistors (such as n-type field-effect transistors), when a given control signal is high, the corresponding switching element is ON. However, implementations using p-type transistors, n-type and p-type transistors, and/or other types of switches are also possible.

As described in detail below, the control circuit 702 can control operation of the first switching converter circuit (Q₃, Q₄, L₁) using a first timing phase (φ1), can control operation of the second switching converter circuit (Q₇, Q₈, L₂) using a second timing phase (φ2), and can control operation of the Nth switching converter circuit (Q₁₁, Q₁₂, L₃) using an Nth timing phase (φN). As such, the hybrid converter 700 of FIG. 13 is an "N-phase" hybrid converter.

The inductors L₁, L₂, and L₃ of the N-phase hybrid converter 700 of FIG. 13 can be a coupled inductor that share a magnetic core, or they can be separate inductors. Using a coupled inductor can result in a smaller size and higher efficiency.

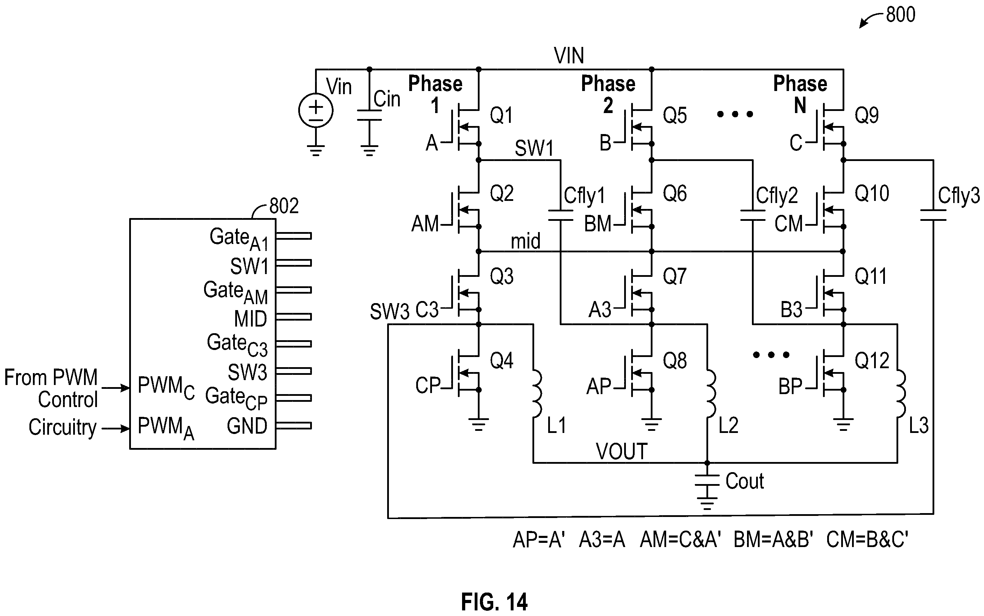

FIG. 14 is a schematic diagram of another example of an N-phase hybrid converter 800. The N-phase hybrid converter 800 can include first phase circuitry, second phase circuitry, third phase circuitry, and so forth up to N phase circuitry. Many of the features of FIG. 14 are similar to the features of FIG. 13 and, for purposes of conciseness, will not be described in detail again.

In contrast to the N-phase hybrid converter 700 of FIG. 13, the flying capacitors C_{fly1} and C_{fly2} can be cross-coupled in FIG. 14. For example, the first capacitor C_{fly1} can be cross-coupled between the first switched-capacitor circuit (Q₁, Q₂, C_{fly1}) and the second switching converter circuit (Q₇, Q₈, L₂). Similarly, the second capacitor C_{fly1} can be cross-coupled between the second switched-capacitor circuit (Q₅, Q₆, C_{fly2}) and a third switching converter circuit (Q₁₁, Q₁₂, L₃), and so forth for all N phases. The flying capacitor of the last phase can then be coupled to the first switching converter circuit (Q₃, Q₄, L₁). By cross-coupling the flying capacitors, a voltage does not need to be shared between adjacent circuitry.

The inductors L₁, L₂, and L₃ of the N-phase hybrid converter 800 of FIG. 14 can be a coupled inductor that share a magnetic core, or they can be separate inductors. Using a coupled inductor can result in a smaller size and higher efficiency.

It can be desirable, in some implementations, to add one phase at a time to increase power output. For example, assume that the N-phase hybrid converter 800 of FIG. 14 (or the N-phase hybrid converter 700 of FIG. 13) is operating in a dual-phase mode where the switching elements Q1-Q8 are configured to turn ON and OFF and the switching elements Q9-12 are OFF. Using various techniques of this disclosure, if the load increases, the N-phase hybrid converter 800 can add another phase by turning the switching elements Q9-12 ON and OFF. This is in contrast to other approaches where phases must be added in groups of two to support additional loading, which can be inefficient.

Similarly, it can be desirable to shed one phase at a time, such as during lighter load conditions, in order to improve efficiency. For example, if the load decreases, the N-phase hybrid converter 800 (or the N-phase hybrid converter 700 of FIG. 13) can turn the switching elements Q9-12 OFF while continuing to turn ON and OFF the switching elements Q1-Q8, thereby decreasing the power output of the N-phase hybrid converter 700. In other words, operation of one or more phases can be disabled during a time period in which operation would otherwise be enabled.

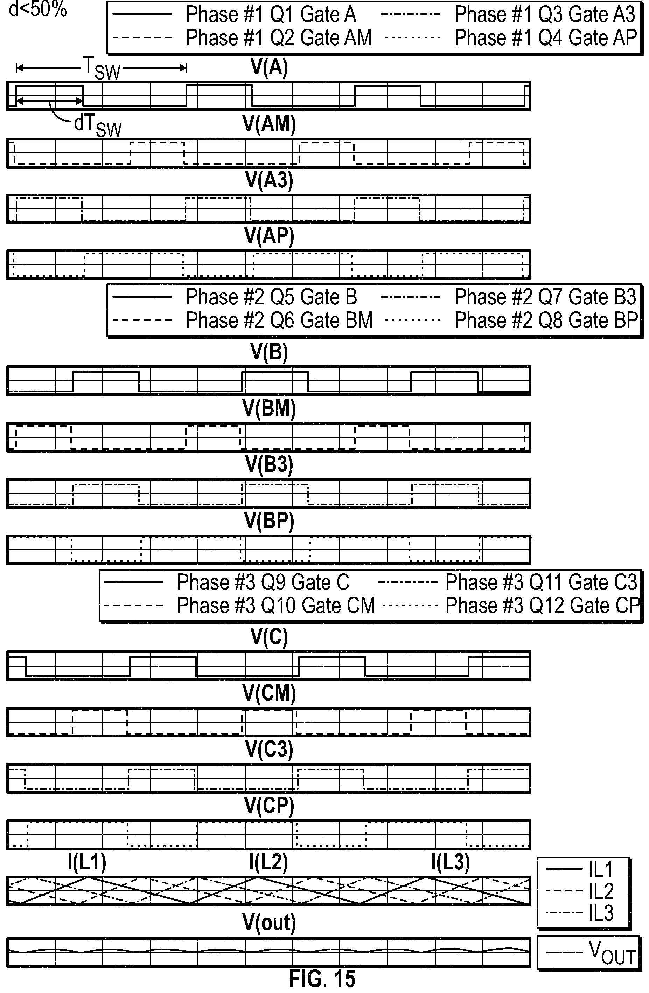

FIG. 15 is an example of a timing diagram of the control signals of the N-phase hybrid converters of FIG. 13 where the duty cycle is less than 50%. Graphs 1-4 represent the control signals A, AM, A3, and AP for the first timing phase. Graphs 5-8 represent the control signals B, BM, B3, and BP for the second timing phase. Graphs 9-12 represent the control signals C, CM, C3, and CP for the third timing phase. Graph 13 represents the current through inductors L1, L2, and L3. The bottom graph, graph 14, represents the output voltage VOUT.

Referring to graphs 1-4, signal V(ap) is a complementary control signal of signal V(a), V(a3)=V(a), and V(am)=V(c)&V(ap). The signal V(a) is applied during the first phase to the gate of Q1. The signal V(am) is applied during the first phase to the gate of Q2. The signal V(a3) is applied during the first phase to the gate of Q3. The signal V(ap) is applied during the first phase to the gate of Q4.The switching period is T_{SW}.

Referring to graphs 5-8, signal V(bp) is a complementary control signal of signal V(b), V(b3)=V(b), and V(bm)=V(a)&V(bp). The signal V(b) is applied during the second phase to the gate of Q5. The signal V(bm) is applied during the second phase to the gate of Q6. The signal V(b3) is applied during the second phase to the gate of Q7. The signal V(bp) is applied during the second phase to the gate of Q8.

Referring to graphs 9-12, signal V(cp) is a complementary control signal of signal V(c), V(c3)=V(c), and V(cm)=V(b)&V(cp). The signal V(c) is applied during the third phase to the gate of Q9. The signal V(cm) is applied during the third phase to the gate of Q10. The signal V(c3) is applied during the third phase to the gate of Q11. The signal V(cp) is applied during the third phase to the gate of Q12.

A control circuit, such as the control circuit 802 of FIG. 13, can generate the first, second, third, etc. timing phases according to a switching cycle having a switching frequency and a duty cycle, where the duty cycle is less than 50%.

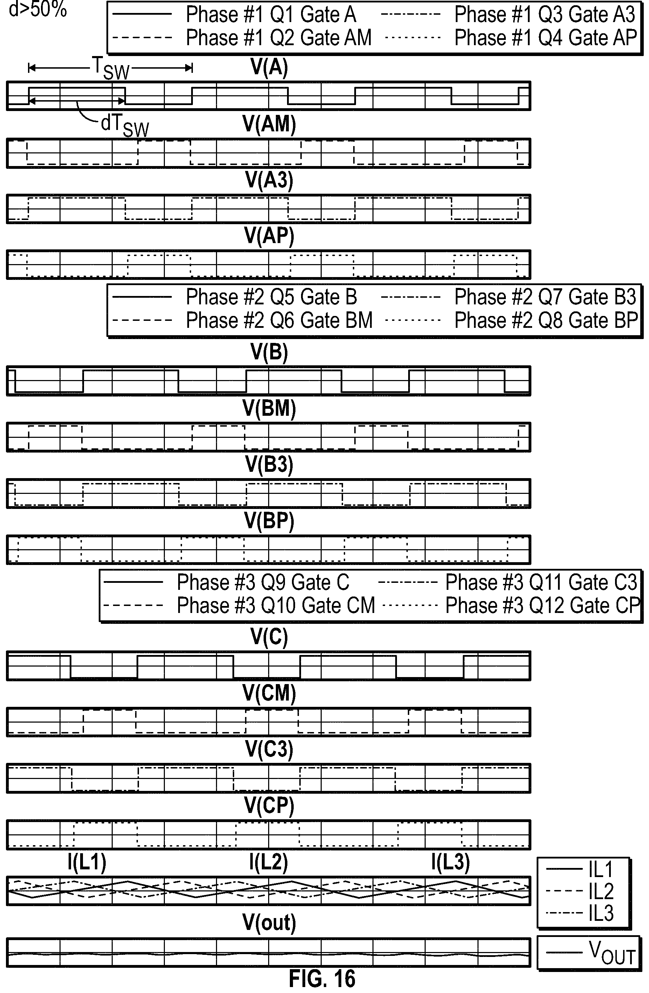

FIG. 16 is another example of a timing diagram of the control signals of the N-phase hybrid converter of FIG. 13 where the duty cycle is greater than 50%. Graphs 1-4 represent the control signals A, AM, A3, and AP for the first timing phase. Graphs 5-8 represent the control signals B, BM, B3, and BP for the second timing phase. Graphs 9-12 represent the control signals C, CM, C3, and CP for the third timing phase. Graph 13 represents the current through inductors L1, L2, and L3. The bottom graph, graph 14, represents the output voltage VOUT. The signals in FIG. 16 are similar to the signals in FIG. 15 and, for purposes of conciseness, will not be described in detail again.

The control circuit, such as the control circuit 702 of FIG. 13, can generate controls signals A, B, C (and other controls signals derived from signals A, B, and C), such as shown in FIG. 15 or FIG. 16, and apply, according to a switching cycle having a switching frequency and a duty cycle, the complementary first control signals, the complementary second control signals, and the complementary third control signals, where the switching cycle includes a first timing phase (φ1), a second timing phase (φ2), and a third timing phase (φ3). In response, the switching converter circuits and the switched-capacitor circuits can generate a series of pulses to at least one LC circuit including at least one capacitor, e.g., the output capacitor C_{OUT} or the input capacitor C_{IN} of FIGS. 13 and 14, and at least one inductor, e.g., at least one of the inductors L₁, L₂, L₃.

The control circuit can then adjust the duty cycle of the switching signals, such as control signals A, B, and C, to adjust the series of pulses to set an output voltage across an output capacitor at a predefined and essentially constant amplitude. The N-phase hybrid converter can then provide the output voltage across the output capacitor C_{OUT} as an output voltage of the N-phase hybrid converter. If the output capacitor C_{OUT} is part of the LC circuit, such as in FIGS. 13 and 14, then the configuration is a buck converter where the output voltage is less than the input voltage. If, however, the capacitor is not part of the LC circuit, then the configuration is a boost converter where the output voltage is greater than the input voltage.

FIG. 17 is a schematic diagram of an example of a N-phase hybrid converter system. The N-phase hybrid converter system 900 includes a N-phase hybrid converter and a PWM control circuit 902. The N-phase hybrid converter 900 of FIG. 17 is similar to the N-phase hybrid converter 700 of FIG. 13.

In the illustrated example, the PWM control circuit 902 includes a first resistor R1, a second resistor R2, an error amplifier EA, a half-range limiter 904, a controlled voltage source 906, an amplifier stability network 908, a first comparator CMP1, a second comparator CMP2, a second comparator CMP3, a first set/reset (S/R) latch RS1, a second S/R latch RS2, a third S/R latch RS3, a top voltage divider resistor R3, a bottom voltage divider resistor R3, a difference amplifier DIFF1, and a gain circuit GAIN1. Although one example of a PWM control circuit 902 is depicted, the teachings herein are applicable to PWM controllers implemented in a wide variety of ways. Accordingly, other implementations are possible.

As shown in FIG. 17, the top voltage divider resistor R3 and the bottom voltage divider resistor R4 are connected as a resistor divider that generates a voltage signal HALFVIN that is about equal to about half the input voltage VIN. Thus, R3 and R4 can have nominally equal resistance values.

The difference amplifier DIFF1 amplifies a voltage difference between the node between the switching elements Q1 and Q2 and the node between the switching elements Q3 and Q4, which is then applied to the gain circuit GAIN1 along with the voltage signal HALFVIN. The half-range limiter 904 serves to limit the output of the gain circuit GAIN1. In particular, when the output of the gain circuit GAIN1 is negative, the output of the half-range limiter 904 is zero. However, when the output of the gain circuit GAIN1 is positive, the output of the half-range limiter 904 tracks the input of the half-range limiter 904 until reaching the maximum allowed output value. The output of the half-range limiter 904 controls the controlled voltage source 906 to adjust the threshold ITH generated by the error amplifier EA. Thus, the controlled voltage source 906 generates an adjusted threshold ITH1 equal to about ITH minus an adjustment voltage set by the half-range limiter 904. In this manner, the PWM control circuit 902 can include a threshold adjustment circuit configured to generate an adjusted threshold signal ITH1 by adjusting the threshold signal ITH based on an input voltage VIN of the multi-phase hybrid converter 900.

The output voltage Vo is divided down to generate a feedback signal FB using a resistor divider formed by the first resistor R1 and the second resistor R2. The feedback signal FB couples to the non-inverting input of the error amplifier EA, which can be implemented as a transconductance amplifier. A reference DC voltage REF is coupled to the inverting input of the error amplifier EA, and the error between FB and REF is converted as a current output used to set the threshold ITH. In this manner, the PWM control circuit 902 can include a threshold generation circuit configured to generate a threshold signal ITH based on a regulated output voltage of a multi-phase hybrid converter 900. The amplifier stability network 908 can be implemented in a wide variety of ways, such as using a resistor-capacitor (RC) compensation network for providing stability compensation.

The first comparator CMP1 compares an indication of the current of the first inductor L1 to the adjusted threshold ITH1. The second comparator CMP2 compares an indication of the current of the second inductor L2 to the threshold ITH, and the third comparator CMP3 compares an indication of the current of the third inductor L3 to the threshold ITH.

The first SR latch RS1 outputs a first PWM control signal A that is set when the first clock signal CLK1 is applied. When the first sensed inductor current signal is higher than ITH1, the output of the first comparator CMP1 resets the first PWM control signal A, which is the control signal of the first switching element Q1 and the third switching element Q3. Furthermore, the first PWM control signal A can be logically inverted to control the fourth switching element Q4.

The second SR latch RS2 outputs a second PWM control signal B that is set when the second clock signal CLK2 is applied. The phase shift of the second clock signal CLK2 with respect to the first clock signal CLK1 depends on the number of N phases in the system 900. When the second sensed inductor current signal is higher than ITH, the output of the second comparator CMP2 resets the second PWM control signal B, which is the control signal of the fifth switching element Q5 and the seventh switching element Q7. Furthermore, the second PWM control signal B can be logically inverted to control the eighth switching element Q8.

The third SR latch RS2 outputs a third PWM control signal C that is set when the third clock signal CLK3 is applied. When the third sensed inductor current signal is higher than ITH, the output of the third comparator CMP3 resets the third PWM control signal B, which is the control signal of the ninth switching element Q5 and the seventh switching element Q7. Furthermore, the second PWM control signal B can be logically inverted to control the eighth switching element Q8.

Further variations and modifications are possible within the scope of the appended claims.

## Claims

1. A multi-phase hybrid converter (100) comprising:
a first switched-capacitor circuit including a first switching element (Q1), a second switching element (Q2), and a second flying capacitor (Cfly2), wherein the first switching element (Q1) and the second switching element (Q2) are connected in series;
a first switching converter circuit including a third switching element (Q3), a fourth switching element (Q4), and a first inductor (L1), wherein the second switching element (Q2) is coupled in series with the third switching element (Q3);
a second switched-capacitor circuit including a fifth switching element (Q5), a sixth switching element (Q6), and a first flying capacitor (Cfly1), wherein the fifth switching element (Q5) and the sixth switching element (Q6) are connected in series;
a second switching converter circuit including a seventh switching element (Q7), an eighth switching element (Q8), and a second inductor (L2), wherein the sixth switching element (Q6) is coupled in series with the seventh switching element (Q7);
wherein the second flying capacitor (Cfly2) is cross-coupled between the first switched-capacitor circuit and the second switching converter circuit;
wherein the first flying capacitor (Cfly1) is cross-coupled between the second switched-capacitor circuit and one of:
the first switching converter circuit; or
a third switching converter circuit;
a first input terminal configured to receive an input voltage (Vin) and coupled to the first switching element (Q1) and the fifth switching element (Q5);
a first output terminal coupled to the first inductor (L1) and the second inductor (L2); and
a control circuit (102) configured to:
control operation of the first switching converter circuit using a first timing phase (φ1) and control operation of the second switching converter circuit using a second timing phase (φ2), wherein the first timing phase includes complementary first control signals (A, A'), and wherein the second timing phase includes complementary second control signals (B, B'); and
control operation of the first switched-capacitor circuit and the second switched-capacitor circuit using third control signals (C, D), the control circuit (102) being configured to generate one of the third control signals using one of the complementary first control signals and one of the complementary second control signals,
wherein the control circuit includes:
a first logic circuit (104) configured to generate a first one (C) of the third control signals using a first one (A') of the complementary first control signals and a second one (B) of the complementary second control signals; and
a second logic circuit (106) to generate a second one (D) of the third control signals using a second one (A) of the complementary first control signals and a first one (B') of the complementary second control signals,.

2. The multi-phase hybrid converter (100) of claim 1, comprising:
a third switched-capacitor circuit including a ninth switching element (Q9), a tenth switching element (Q10), and a third capacitor (Cfly3);
the third switching converter circuit including an eleventh switching element (Q11), a twelfth switching element (Q12), and a third inductor (L3), wherein the tenth switching element (Q10) is coupled with the eleventh switching element (Q11);
wherein the first flying capacitor (Cfly1) is connected between the second switched-capacitor circuit and the third switching converter circuit,
wherein the third capacitor (Cfly3) is connected between the third switched-capacitor circuit and the first switching converter circuit,
the control circuit (102) being configured to:
control operation of the third switching converter circuit using a third timing phase.

3. The multi-phase hybrid converter (100) of claim 2, wherein the first inductor (L1) and the second inductor (L2) share a magnetic core,

4. The multi-phase hybrid converter (100) of claim 3, wherein the multi-phase hybrid converter (100) further comprises a third inductor (L3) configured to share the magnetic core.

5. The multi-phase hybrid converter of claims 2, 3 or 4, the control circuit (102) being configured to:
disable operation of at least the third switching converter circuit during a time period in which operation of the third switching converter circuit would otherwise be enabled.

6. The multi-phase hybrid converter (100) of any preceding claim, comprising:
a fourth capacitor (Cmid1) coupled between a reference voltage node and a first node between the second switching element (Q2) and the third switching element (Q3); and
a fifth capacitor (Cmid2) coupled between the reference voltage node and a second node that is between the sixth switching element (Q6) and the seventh switching element (Q7),
wherein, optionally, the multi-phase hybrid converter (100) further comprises a network circuit coupled between the first node and the second node.

7. The multi-phase hybrid converter (100) of any preceding claim, wherein the second capacitor is connected between the second switched-capacitor circuit and the first switching converter circuit.

8. The multi-phase hybrid converter (100) of any preceding claim, wherein the multi-phase hybrid converter is configured to generate an output voltage that is less than an input voltage.

9. The multi-phase hybrid converter (100) of any preceding claim, comprising:
a pulse-width modulation control circuit (902) including:
a threshold generation circuit configured to generate a threshold signal based on a regulated output voltage of the multi-phase hybrid converter;
a threshold adjustment circuit configured to generate an adjusted threshold signal by adjusting the threshold signal based on an input voltage of the multi-phase hybrid converter (100);
a first comparator configured to compare a first inductor current of the multi-phase hybrid converter to the adjusted threshold signal; and
a first latch circuit configured to generate at least one first switch control signal based on an output of the first comparator.

10. The multi-phase hybrid converter (100) of claim 9, wherein the pulse-width modulation control circuit (902) further includes:
a second comparator configured to compare a second inductor current of the multi-phase hybrid converter (100) to the threshold signal;
a second latch circuit configured to generate at least one second switch control signal based on an output of the second comparator;
a third comparator configured to compare a third inductor current of the multi-phase hybrid converter (100) to the threshold signal; and
a third latch circuit configured to generate at least one third switch control signal based on an output of the third comparator.

11. A method of operating a multi-phase hybrid converter (100), comprising: a first switched-capacitor circuit including a first switching element (Q1), a second switching element (Q2), and a second flying capacitor (Cfly2), wherein the first switching element (Q1) and the second switching element (Q2) are connected in series; a first switching converter circuit including a third switching element (Q3), a fourth switching element (Q4), and a first inductor (L1), wherein the second switching element (Q2) is coupled in series with the third switching element (Q3); a second switched-capacitor circuit including a fifth switching element (Q5), a sixth switching element (Q6), and a first flying capacitor (Cfly1), wherein the fifth switching element (Q5) and the sixth switching element (Q6) are connected in series; a second switching converter circuit including a seventh switching element (Q7), an eighth switching element (Q8), and a second inductor (L2), wherein the sixth switching element (Q6) is coupled in series with the seventh switching element (Q7); wherein the second flying capacitor (Cfly2) is cross-coupled between the first switched-capacitor circuit and the second switching converter circuit; wherein the first flying capacitor (Cfly1) is cross-coupled between the second switched-capacitor circuit and one of: the first switching converter circuit; or a third switching converter circuit; a first input terminal, for receiving an input voltage (Vin), being coupled to the first switching element (Q1) and the fifth switching element (Q5); a first output terminal coupled to the first inductor (L1) and the second inductor (L2);
the method comprising:
generating complementary first control signals (A, A') to turn ON and OFF switching elements of a first switching converter circuit, wherein a first timing phase (φ1) includes the complementary first control signals;
generating complementary second control signals (B, B') to turn ON and OFF switching elements of a second switching converter circuit, wherein a second timing phase (φ2) includes the complementary second control signals;
generating, third control signals (C, D) to turn ON and OFF switching elements (Q1, Q2; Q5, Q6) of a first switched-capacitor circuit and a second switched-capacitor circuit, including:
generating, using a first logic circuit (104), a first one (C) of the third control signals using a first one (A') of the complementary first control signals and a second one (B) of the complementary second control signals; and
generating, using a second logic circuit (106), a second one (D) of the third control signals using a second one (A) of the complementary first control signals and a first one (B') of the complementary second control signals;
applying, according to a switching cycle having a switching frequency and a duty cycle, the complementary first control signals, the complementary second control signals, and the third control signals, the switching cycle including the first timing phase and the second timing phase;
generating a series of pulses by the first switching converter circuit, the second switching converter circuit, the first switched-capacitor circuit, and the second switched-capacitor circuit, to at least one LC circuit including at least one capacitor (Cin, Cout) and at least one inductor (L1, L2);
adjusting the duty cycle of switching signals to adjust the series of pulses to set an output voltage (Vout) across an output capacitor (Cout); and
providing the output voltage across the output capacitor as an output voltage of the multi-phase hybrid converter.

12. The method of claim 11, comprising:
generating complementary fourth control signals (BP, B3) to turn ON and OFF switching elements (Q11, Q12) of a third switching converter circuit, wherein a third timing phase (φ3) includes the complementary third control signals; and
generating, using one of the complementary second control signals and one of the complementary third control signals, fifth control signals (C, CM) to turn ON and OFF switching elements (Q9, Q10) of a third switched-capacitor circuit,
wherein, optionally, the method further comprises:
disabling operation of at least the third switching converter circuit during a time period in which operation of the third switching converter circuit would otherwise be enabled.

## Patentansprüche

1. Mehrphasen-Hybridwandler (100), umfassend:
einen ersten Schaltkreis mit geschaltetem Kondensator, der ein erstes Schaltelement (Q1), ein zweites Schaltelement (Q2), und einen zweiten Flying-Kondensator (Cfly2) einschließt, wobei das erste Schaltelement (Q1) und das zweite Schaltelement (Q2) in Reihe verbunden sind;
einen ersten geschalteten Wandlerschaltkreis, der ein drittes Schaltelement (Q3), ein viertes Schaltelement (Q4) und einen ersten Induktor (L1) einschließt, wobei das zweite Schaltelement (Q2) in Reihe mit dem dritten Schaltelement (Q3) gekoppelt ist;
einen zweiten Schaltkreis mit geschaltetem Kondensator, der ein fünftes Schaltelement (Q5), ein sechstes Schaltelement (Q6) und einen ersten Flying-Kondensator (Cfly1) einschließt, wobei das fünfte Schaltelement (Q5) und das sechste Schaltelement (Q6) in Reihe verbunden sind;
einen zweiten geschalteten Wandlerschaltkreis, der ein siebtes Schaltelement (Q7), ein achtes Schaltelement (Q8) und einen zweiten Induktor (L2) einschließt, wobei das sechste Schaltelement (Q6) in Reihe mit dem siebten Schaltelement (Q7) gekoppelt ist;
wobei der zweite Flying-Kondensator (Cfly2) zwischen dem ersten Schaltkreis mit geschaltetem Kondensator und dem zweiten Schaltkreis mit geschaltetem Kondensator kreuz-gekoppelt ist;
wobei der erste Flying-Kondensator (Cfly1) kreuz-gekoppelt ist zwischen dem zweiten Schaltkreis mit geschaltetem Kondensator und einem von:
dem ersten geschalteten Wandlerschaltkreis; oder
einem dritten geschaltetem Wandlerschaltkreis;
einen ersten Eingangsanschluss, der konfiguriert ist, um eine Eingangsspannung (Vin) zu empfangen, und gekoppelt mit dem ersten Schaltelement (Q1) und dem fünften Schaltelement (Q5);
einen ersten Ausgangsanschluss, der mit dem ersten Induktor (L1) und dem zweiten Induktor (L2) gekoppelt ist; und
einen Steuerschaltkreis (102), der konfiguriert ist zum:
Steuern des Betriebs des ersten geschalteten Wandlerschaltkreises unter Verwendung einer ersten Timing-Phase (φ1) und
Steuern des Betriebs des zweiten geschalteten Wandlerschaltkreises unter Verwendung einer zweiten Timing-Phase (φ2),
wobei die erste Timing-Phase komplementäre erste Steuersignale (A, A') einschließt, und wobei die zweite Timing-Phase komplementäre zweite Steuersignale (B, B') einschließt; und
Steuern des Betriebs des ersten Schaltkreises mit geschaltetem Kondensator und des zweiten Schaltkreises mit geschaltetem Kondensator unter Verwendung dritter Steuersignale (C, D), wobei die Steuerschaltkreis (102) konfiguriert ist, um eines der dritten Steuersignale unter Verwendung eines der komplementären ersten Steuersignale und eines der komplementären zweiten Steuersignale zu erzeugen,
wobei der Steuerschaltkreis Folgendes einschließt:
einen ersten logischen Schaltkreis (104), der konfiguriert ist, um ein erstes (C) der dritten Steuersignale zu erzeugen unter Verwendung eines ersten einen (A') der komplementären ersten Steuersignale und eines zweiten einen (B) der komplementären zweiten Steuersignale; und
einen zweiten logischen Schaltkreis (106) zum Erzeugen eines zweiten einen (D) der dritten Steuersignale unter Verwendung eines zweiten einen (A) der komplementären ersten Steuersignale und eines ersten einen (B') der komplementären zweiten Steuersignale,.

2. Mehrphasen-Hybridwandler (100) nach Anspruch 1, umfassend:
einen dritten Schaltkreis mit geschaltetem Kondensator, der ein neuntes Schaltelement (Q9), ein zehntes Schaltelement (Q10), und einen dritten Kondensator (Cfly3) einschließt;
wobei der dritte geschaltete Wandlerschaltkreis ein elftes Schaltelement (Q11), ein zwölftes Schaltelement (Q12) und einen dritten Induktor (L3) einschließt, wobei das zehnte Schaltelement (Q10) mit dem elften Schaltelement (Q11) gekoppelt ist;
wobei der erste Flying-Kondensator (Cfly1) zwischen dem zweiten Schaltkreis mit geschaltetem Kondensator und dem dritten geschalteten Wandlerschaltkreis verbunden ist,
wobei der dritte Kondensator (Cfly3) zwischen den dritten Schaltkreis mit geschaltetem Kondensator und dem ersten geschalteten Wandlerschaltkreis verbunden ist,
wobei der Steuerschaltkreis (102) konfiguriert ist zum:
Steuern des Betriebs des dritten geschalteten Wandlerschaltkreises unter Verwendung einer dritten Timing-Phase.

3. Mehrphasen-Hybridwandler (100) nach Anspruch 2, wobei der erste Induktor (L1) und der zweite Induktor (L2) einen Magnetkern teilen,

4. Mehrphasen-Hybridwandler (100) nach Anspruch 3, wobei der Mehrphasen-Hybridwandler (100) weiter einen dritten Induktor (L3) umfasst, der konfiguriert ist, um sich den Magnetkern zu teilen.

5. Mehrphasen-Hybridwandler nach Anspruch 2, 3 oder 4, wobei der Steuerschaltkreis (102) konfiguriert ist zum:
Deaktivieren des Betriebs von mindestens dem dritten geschalteten Wandlerschaltkreis während eines Zeitraums, in dem der Betrieb des dritten geschalteten Wandlerschaltkreises ansonsten aktiviert wäre.

6. Mehrphasen-Hybridwandler (100) nach einem der vorstehenden Ansprüche, umfassend:
einen vierten Kondensator (Cmid1), der zwischen einem Referenzspannungsknoten und einem ersten Knoten zwischen dem zweiten Schaltelement (Q2) und dem dritten Schaltelement (Q3) gekoppelt ist; und
einen fünften Kondensator (Cmid2), der zwischen dem Referenzspannungsknoten und einem zweiten Knoten gekoppelt ist, der zwischen dem sechsten Schaltelement (Q6) und dem siebten Schaltelement (Q7) ist,
wobei optional der Mehrphasen-Hybridwandler (100) weiter einen zwischen dem ersten Knoten und dem zweiten Knoten gekoppelten Netzwerkschaltkreis umfasst.

7. Mehrphasen-Hybridwandler (100) nach einem der vorstehenden Ansprüche, wobei der zweite Kondensator zwischen dem zweiten Schaltkreis mit geschaltetem Kondensator und dem ersten geschalteten Wandlerschaltkreis verbunden ist.

8. Mehrphasen-Hybridwandler (100) nach einem der vorstehenden Ansprüche, wobei der mehrphasige Hybridwandler konfiguriert ist, um eine Ausgangsspannung zu erzeugen, die kleiner ist als eine Eingangsspannung.

9. Mehrphasen-Hybridwandler (100) nach einem der vorstehenden Ansprüche, umfassend:
einen Pulsbreitenmodulationssteuerschaltkreis (902), einschließend:
einen Schwellenwerterzeugungsschaltkreis, der konfiguriert ist, um ein Schwellenwertsignal basierend auf einer geregelten Ausgangsspannung des mehrphasigen Hybridwandlers zu erzeugen;
einen Schwellenwertanpassungsschaltkreis, der konfiguriert ist, um ein angepasstes Schwellwertsignal zu erzeugen, indem das Schwellwertsignal basierend auf einer Eingangsspannung des Mehrphasen-Hybridwandlers (100) angepasst wird;
einen ersten Komparator, der konfiguriert ist, um einen ersten Induktorstrom des mehrphasigen Hybridwandlers mit dem angepassten Schwellwertsignal zu vergleichen; und
einen ersten Sperrschaltkreis, der konfiguriert ist, um mindestens ein erstes Schaltsteuersignal basierend auf einem Ausgang des ersten Komparators zu erzeugen.

10. Mehrphasen-Hybridwandler (100) nach Anspruch 9, wobei der Pulsbreitenmodulationssteuerschaltkreis (902) weiter Folgendes einschließt:
einen zweiten Komparator, der konfiguriert ist, um einen zweiten Induktorstrom des Mehrphasen-Hybridwandlers (100) mit dem Schwellwertsignal zu vergleichen;
einen zweiten Sperrschaltkreis, der konfiguriert ist, um mindestens ein zweites Schaltsteuersignal basierend auf einem Ausgang des zweiten Komparators zu erzeugen;
einen dritten Komparator, der konfiguriert ist, um einen dritten Induktorstrom des Mehrphasen-Hybridwandlers (100) mit dem Schwellwertsignal zu vergleichen; und
einen dritten Sperrschaltkreis, der konfiguriert ist, um mindestens ein drittes Schaltsteuersignal basierend auf einem Ausgang des dritten Komparators zu erzeugen.

11. Verfahren zum Betreiben eines Mehrphasen-Hybridwandlers (100), umfassend: einen ersten Schaltkreis mit geschalteten Kondensator, der ein erstes Schaltelement (Q1), ein zweites Schaltelement (Q2), und einen zweiten Flying-Kondensator (Cfly2) einschließt, wobei das erste Schaltelement (Q1) und das zweite Schaltelement (Q2) in Reihe verbunden sind; einen ersten geschalteten Wandlerschaltkreis, der ein drittes Schaltelement (Q3), ein viertes Schaltelement (Q4) und einen ersten Induktor (L1) einschließt, wobei das zweite Schaltelement (Q2) in Reihe gekoppelt ist mit dem dritten Schaltelement (Q3); einen zweiten Schaltkreis mit geschaltetem Kondensator, der ein fünftes Schaltelement (Q5), ein sechstes Schaltelement (Q6), und einen ersten Flying-Kondensator (Cfly1) einschließt, wobei das fünfte Schaltelement (Q5) und das sechste Schaltelement (Q6) in Reihe verbunden sind; einen zweiten geschalteten Wandlerschaltkreis, der ein siebtes Schaltelement (Q7), ein achtes Schaltelement (Q8), und einen zweiten Induktor (L2) einschließt, wobei das sechste Schaltelement (Q6) in Reihe mit dem siebten Schaltelement (Q7) gekoppelt ist; wobei der zweite Flying-Kondensator (Cfly2) zwischen dem ersten Schaltkreis mit geschaltetem Kondensator und dem zweiten geschalteten Wandlerschaltkreis kreuz-gekoppelt ist; wobei der erste Flying-Kondensator (Cfly1) gekoppelt ist zwischen dem zweiten Schaltkreis mit geschaltetem Kondensator und einem von: dem ersten geschalteten Wandlerschaltkreis; oder einem dritten geschalteten Wandlerschaltkreis; einem ersten Eingangsanschluss zum Empfangen einer Eingangsspannung (Vin), der mit dem ersten Schaltelement (Q1) und dem fünften Schaltelement (Q5) gekoppelt ist; einem ersten Ausgangsanschluss, der mit dem ersten Induktor (L1) und dem zweiten Induktor (L2) gekoppelt ist;
wobei das Verfahren folgendes umfasst:
Erzeugen komplementärer erster Steuersignale (A, A') zum EIN- und AUS-Schalten von Schaltelementen eines ersten geschalteten Wandlerschaltkreises, wobei eine erste Timing-Phase (φ1) die komplementären ersten Steuersignale einschließt;
Erzeugen komplementärer zweiter Steuersignale (B, B') zum EIN- und AUS-Schalten von Schaltelementen eines zweiten geschalteten Wandlerschaltkreises, wobei eine zweite Timing-Phase (φ2) die komplementären zweiten Steuersignale einschließt;
Erzeugen dritter Steuersignale (C, D) zum EIN- und AUS-Schalten von Schaltelementen (Q1, Q2; Q5, Q6) eines ersten Schaltkreises mit geschaltetem Kondensator und eines zweiten Schaltkreises mit geschaltetem Kondensator, einschließend:
Erzeugen, unter Verwendung eines ersten logischen Schaltkreises (104), eines ersten einen (C) der dritten Steuersignale unter Verwendung eines ersten einen (A') der komplementären ersten Steuersignale und eines zweiten einen (B) der komplementären zweiten Steuersignale; und
Erzeugen, unter Verwendung eines zweiten logischen Schaltkreises (106), eines zweiten einen (D) der dritten Steuersignale unter Verwendung eines zweiten einen (A) der komplementären ersten Steuersignale und eines ersten einen (B') der komplementären zweiten Steuersignale;
Anwenden, gemäß einem Schaltzyklus, der eine Schaltfrequenz und ein Tastverhältnis aufweist, der komplementären ersten Steuersignale, der komplementären zweiten Steuersignale und der dritten Steuersignale, wobei der Schaltzyklus die erste Timing-Phase und die zweite Timing-Phase einschließt;
Erzeugen einer Reihe von Pulsen durch den ersten geschalteten Wandlerschaltkreises, den zweiten geschalteten Wandlerschaltkreis, den ersten Schaltkreis mit geschaltetem Kondensator und den zweiten Schaltkreis mit geschaltetem Kondensator, an mindestens einen LC-Schaltkreis, der die mindestens einen Kondensator (Cin, Cout) und mindestens einen Induktor (L1, L2) einschließt;
Anpassen des Tastverhältnisses der Schaltsignale, um die Reihe von Pulsen anzupassen, um eine Ausgangsspannung (Vout) an einem Ausgangskondensator (Cout) einzustellen; und
Bereitstellen der Ausgangsspannung an dem Ausgangskondensator als eine Ausgangsspannung des mehrphasigen Hybridwandlers.

12. Verfahren nach Anspruch 11, umfassend:
Erzeugen komplementärer vierter Steuersignale (BP, B3) zum EIN- und AUS-Schalten von Schaltelementen (Q11, Q12) eines dritten geschalteten Wandlerschaltkreises, wobei eine dritte Timing-Phase (φ3) die komplementären dritten Steuersignale einschließt; und
Erzeugen, unter Verwendung eines der komplementären zweiten Steuersignale und eines der komplementären dritten Steuersignale, von fünften Steuersignalen (C, CM) zum EIN- und AUS-Schalten von Schaltelementen (Q9, Q10) eines dritten Schaltkreises mit geschaltetem Kondensator,
wobei optional das Verfahren weiter Folgendes umfasst:
Deaktivieren des Betriebs von mindestens dem dritten geschalteten Wandlerschaltkreis während eines Zeitraums, in dem der Betrieb des dritten geschalteten Wandlerschaltkreises andernfalls aktiviert wäre.

## Revendications

1. Convertisseur hybride à phases multiples (100) comprenant :
un premier circuit de condensateur commuté incluant un premier élément de commutation (Q1), un deuxième élément de commutation (Q2), et un deuxième condensateur flottant (Cfly2), dans lequel le premier élément de commutation (Q1) et le deuxième élément de commutation (Q2) sont connectés en série ;
un premier circuit de convertisseur de commutation incluant un troisième élément de commutation (Q3), un quatrième élément de commutation (Q4), et un premier inducteur (L1), dans lequel le deuxième élément de commutation (Q2) est couplé en série au troisième élément de commutation (Q3) ;
un deuxième circuit de condensateur commuté incluant un cinquième élément de commutation (Q5), un sixième élément de commutation (Q6), et un premier condensateur flottant (Cfly1), dans lequel le cinquième élément de commutation (Q5) et le sixième élément de commutation (Q6) sont connectés en série ;
un deuxième circuit de convertisseur de commutation incluant un septième élément de commutation (Q7), un huitième élément de commutation (Q8), et un deuxième inducteur (L2), dans lequel le sixième élément de commutation (Q6) est couplé en série au septième élément de commutation (Q7) ;
dans lequel le deuxième condensateur flottant (Cfly2) est couplé de manière croisée entre le premier circuit de condensateur commuté et le deuxième circuit de convertisseur de commutation ;
dans lequel le premier condensateur flottant (Cfly1) est couplé de manière croisée entre le deuxième circuit de condensateur commuté et l'un ou l'une :
du premier circuit de convertisseur de commutation ; ou
d'un troisième circuit de convertisseur de commutation ;
d'une première borne d'entrée configurée pour recevoir une tension d'entrée (Vin) et couplée au premier élément de commutation (Q1) et au cinquième élément de commutation (Q5) ;
d'une première borne de sortie couplée au premier inducteur (L1) et au deuxième inducteur (L2) ; et
d'une unité de commande (102) configurée pour :
commander le fonctionnement du premier circuit de convertisseur de commutation en utilisant une première phase de temporisation (φ1) et
commander le fonctionnement du deuxième circuit de convertisseur de commutation en utilisant une deuxième phase de temporisation (φ2),
dans lequel la première phase de temporisation inclut des premiers signaux de commande complémentaires (A, A'), et dans lequel
la deuxième phase de temporisation inclut des deuxièmes signaux de commande complémentaires (B, B') ; et
commander le fonctionnement du premier circuit de condensateur commuté et du deuxième circuit de condensateur commuté en utilisant des troisièmes signaux de commande (C, D), le circuit de commande (102) étant configuré pour générer l'un des troisièmes
signaux de commande en utilisant l'un des premiers signaux de commande complémentaires et l'un des deuxièmes signaux de commande complémentaires,
dans lequel le circuit de commande inclut :
un premier circuit logique (104) configuré pour générer un premier (C) des troisièmes signaux de commande en utilisant un premier
(A') des premiers signaux de commande complémentaires et un deuxième (B) des deuxièmes signaux de commande complémentaires ; et
un second circuit logique (106) pour générer un deuxième (D) des troisièmes signaux de commande en utilisant un
deuxième (A) des premiers signaux de commande complémentaires et un premier (B') des deuxièmes signaux de commande complémentaires.

2. Convertisseur hybride à phases multiples (100) selon la revendication 1, comprenant :
un troisième circuit de condensateur commuté incluant un neuvième élément de commutation (Q9), un dixième élément de commutation (Q10), et un troisième condensateur flottant (Cfly3) ;
le troisième circuit de convertisseur de commutation incluant un onzième élément de commutation (Q11), un douzième élément de commutation (Q12), et un troisième inducteur (L3), dans lequel le dixième élément de commutation (Q10) est couplé au onzième élément de commutation (Q11) ;
dans lequel le premier condensateur flottant (Cfly1) est connecté entre le deuxième circuit de condensateur commuté et le troisième circuit de convertisseur de commutation,
dans lequel le troisième condensateur flottant (Cfly3) est connecté entre le troisième circuit de condensateur commuté et le premier circuit de convertisseur de commutation,
le circuit de commande (102) étant configuré pour
commander le fonctionnement du troisième circuit de convertisseur de commutation en utilisant une troisième phase de temporisation.

3. Convertisseur hybride à phases multiples (100) selon la revendication 2, dans lequel le premier inducteur (L1) et le deuxième inducteur (L2) partagent un noyau magnétique.

4. Convertisseur hybride à phases multiples (100) selon la revendication 3, dans lequel le convertisseur hybride à phases multiples (100) comprend en outre un troisième inducteur (L3) configuré pour partager le noyau magnétique.

5. Convertisseur hybride à phases multiples selon la revendication 2, 3 ou 4, le circuit de commande (102) étant configuré pour :
désactiver le fonctionnement d'au moins le troisième circuit de convertisseur de commutation au cours d'une période de temps pendant laquelle le fonctionnement du troisième circuit de convertisseur de commutation aurait autrement été activé.

6. Convertisseur hybride à phases multiples (100) selon une quelconque revendication précédente, comprenant :
un quatrième condensateur (Cmid1) couplé entre un nœud de tension de référence et un premier nœud entre le deuxième élément de commutation (Q2) et le troisième élément de commutation (Q3) ; et
un cinquième condensateur (Cmid2) couplé entre le nœud de tension de référence et un second nœud qui est situé entre le sixième élément de commutation (Q6) et le septième élément de commutation (Q7),
dans lequel, facultativement, le convertisseur hybride à phases multiples (100) comprend en outre un circuit de réseau couplé entre le premier nœud et le second noeud.

7. Convertisseur hybride à phases multiples (100) selon une quelconque revendication précédente, dans lequel le deuxième condensateur est connecté entre le deuxième circuit de condensateur commuté et le premier circuit de convertisseur de commutation.

8. Convertisseur hybride à phases multiples (100) selon une quelconque revendication précédente, dans lequel le convertisseur hybride à phases multiples est configuré pour générer
une tension de sortie qui est inférieure à une tension d'entrée.

9. Convertisseur hybride à phases multiples (100) selon une quelconque revendication précédente, comprenant :
un circuit de commande à modulation de largeur d'impulsion (902) incluant :
un circuit de génération de seuil configuré pour générer un signal de seuil sur la base d'une tension de sortie régulée du convertisseur hybride à phases multiples ;
un circuit d'ajustement de seuil configuré pour générer un signal de seuil ajusté par ajustement du signal de seuil sur la base d'une tension d'entrée du convertisseur hybride à phases multiples (100) ;
un premier comparateur configuré pour comparer un premier courant d'inducteur du convertisseur hybride à phases multiples au signal de seuil ajusté ; et
un premier circuit de verrouillage configuré pour générer au moins un premier signal de commande de commutation sur la base d'une sortie du premier comparateur.

10. Convertisseur hybride à phases multiples (100) selon la revendication 9, dans lequel le circuit de commande à modulation de largeur d'impulsion (902) inclut en outre :
un deuxième comparateur configuré pour comparer un deuxième courant d'inducteur du convertisseur hybride à phases multiples (100) au signal de seuil ;
un deuxième circuit de verrouillage configuré pour générer au moins un deuxième signal de commande de commutation sur la base d'une sortie du deuxième comparateur ;
un troisième comparateur configuré pour comparer un troisième courant d'inducteur du convertisseur hybride à phases multiples (100) au signal de seuil ; et
un troisième circuit de verrouillage configuré pour générer au moins un troisième signal de commande de commutation sur la base d'une sortie du troisième comparateur.

11. Procédé de fonctionnement d'un convertisseur hybride à phases multiples (100), comprenant : un premier circuit de condensateur commuté incluant un premier élément de commutation (Q1), un deuxième élément de commutation (Q2), et un deuxième condensateur flottant (Cfly2), dans lequel le premier élément de commutation (Q1) et le deuxième élément de commutation (Q2) sont connectés en série ; un premier circuit de convertisseur de commutation incluant un troisième élément de commutation (Q3), un quatrième élément de commutation (Q4), et un premier inducteur (L1), dans lequel le deuxième élément de commutation (Q2) est couplé en série au troisième élément de commutation (Q3) ; un deuxième circuit de condensateur commuté incluant un cinquième élément de commutation (Q5), un sixième élément de commutation (Q6), et un premier condensateur flottant (Cfly1), dans lequel le cinquième élément de commutation (Q5) et le sixième élément de commutation (Q6) sont connectés en série ; un deuxième circuit de convertisseur de commutation incluant un septième élément de commutation (Q7), un huitième élément de commutation (Q8), et un deuxième inducteur (L2), dans lequel le sixième élément de commutation (Q6) est couplé en série au septième élément de commutation (Q7) ; dans lequel le deuxième condensateur flottant (Cfly2) est couplé de manière croisée entre le premier circuit de condensateur commuté et le deuxième circuit de convertisseur de commutation ; dans lequel le premier condensateur flottant (Cfly1) est couplé de manière croisée entre le deuxième circuit de condensateur commuté et l'un ou l'une :
du premier circuit de convertisseur de commutation ; ou d'un troisième circuit de convertisseur de commutation ; d'une première borne d'entrée, pour recevoir une tension d'entrée (Vin), étant couplée au premier élément de commutation (Q1) et au cinquième élément de commutation (Q5) ; d'une première borne de sortie couplée au premier inducteur (L1) et au deuxième inducteur (L2) ;
le procédé comprenant :
la génération de premiers signaux de commande complémentaires (A, A')
pour activer et désactiver des éléments de commutation du
premier circuit de convertisseur de commutation, dans lequel une première phase de temporisation (φ1)
inclut les premiers signaux de commande
complémentaires ;
la génération de deuxièmes signaux de commande complémentaires (B, B')
pour activer et désactiver des éléments de commutation d'un
deuxième circuit de convertisseur de commutation, dans lequel une deuxième phase de temporisation (φ2)
inclut les deuxièmes signaux de
commande complémentaires ;
la génération de troisièmes signaux de commande (C, D) pour activer et désactiver des éléments de commutation (Q1, Q2 ; Q5, Q6) d'un premier circuit de condensateur commuté et d'un deuxième circuit de condensateur commuté, incluant :
la génération, en utilisant un premier circuit logique (104), d'un premier (C) des troisièmes signaux de commande en utilisant
un premier (A') des premiers signaux de commande complémentaires et un deuxième (B) des deuxièmes
signaux de commande complémentaires ; et
la génération, en utilisant un second circuit logique (106), d'un deuxième (D) des troisièmes signaux de commande
en utilisant un deuxième (A) des premiers signaux de commande complémentaires et un premier (B') des deuxièmes signaux de commande complémentaires ;
l'application, selon un cycle de commutation présentant une fréquence de commutation et un cycle de service, des premiers signaux de commande complémentaires, des deuxièmes signaux de commande complémentaires, et des troisièmes signaux de commande complémentaires incluant la première phase de temporisation et la deuxième phase de temporisation ;
la génération d'une série d'impulsions par le premier circuit de convertisseur de commutation, le deuxième circuit de convertisseur de commutation, le premier circuit de condensateur commuté, et le deuxième circuit de condensateur commuté, vers au moins un circuit LC incluant au moins un condensateur (Cin, Cout) et au moins un inducteur (L1, L2) ;
l'ajustement du cycle de service des signaux de commutation pour ajuster les séries d'impulsions afin de définir une tension de sortie (Vout) à travers un condensateur de sortie (Cout) ; et
la fourniture de la tension de sortie à travers le condensateur de sortie en tant qu'une tension de sortie du convertisseur hybride à phases multiples.

12. Procédé selon la revendication 11, comprenant :
la génération de quatrièmes signaux de commande complémentaires (BP, B3)
pour activer et désactiver des éléments de commutation (Q11, Q12) d'un
troisième circuit de convertisseur de commutation, dans lequel une troisième phase de temporisation (φ3)
inclut les troisièmes signaux
de commande complémentaires ; et
la génération, en utilisant l'un des deuxièmes signaux de commande complémentaires et l'un des troisièmes signaux de commande complémentaires, de cinquièmes signaux de commande (C, CM) pour activer et désactiver des éléments de commutation (Q9, Q10) d'un troisième circuit de condensateur commuté,
dans lequel, facultativement, le procédé comprend en outre :
la désactivation du fonctionnement d'au moins le troisième circuit de convertisseur de commutation au cours d'une période de temps pendant laquelle le fonctionnement du troisième circuit de convertisseur de commutation aurait autrement été activé.
